(19) **Europäisches Patentamt**
**European Patent Office**
**Office européen des brevets**

(11) **EP 3 617 936 B1**

(12) **EUROPEAN PATENT SPECIFICATION**

(45) Date of publication and mention
of the grant of the patent:
**08.05.2024  Bulletin 2024/19**

(51) International Patent Classification (IPC):
*G06V 20/64* *(2022.01)*    *B25J 15/00* *(2006.01)*
*B25J 15/06* *(2006.01)*    *G06V 10/30* *(2022.01)*
*G06V 10/50* *(2022.01)*    *B25J 9/16* *(2006.01)*
*B65G 47/91* *(2006.01)*

(21) Application number: **19159684.0**

(22) Date of filing: **27.02.2019**

(52) Cooperative Patent Classification (CPC):
**B25J 9/1697; B25J 15/0052; B25J 15/0616;
B65G 47/917; G06V 10/30; G06V 10/50;
G06V 20/64;** G05B 2219/39558; G06V 2201/06

(54) **TRANSPORT SYSTEM, CONTROL METHOD AND PROGRAM**

TRANSPORTSYSTEM, STEUERUNGSVERFAHREN UND PROGRAMM

SYSTÈME DE TRANSPORT, MÉTHODE DE CONTRÔLE ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2018   JP 2018159653**

(43) Date of publication of application:
**04.03.2020   Bulletin 2020/10**

(73) Proprietors:
• **Kabushiki Kaisha Toshiba
Minato-ku
Tokyo 105-8001 (JP)**
• **Toshiba Infrastructure Systems &
Solutions Corporation
Kawasaki-shi, Kanagawa 212-0013 (JP)**

(72) Inventors:
• **Komoda, Kazuma
Tokyo, 105-8001 (JP)**
• **Ogawa, Akihito
Tokyo, 105-8001 (JP)**
• **Tokura, Seiji
Tokyo, 105-8001 (JP)**
• **Eto, Haruna
Tokyo, 105-8001 (JP)**
• **Jiang, Ping
Tokyo, 105-8001 (JP)**
• **Sugahara, Atsushi
Tokyo, 105-8001 (JP)**

(74) Representative: **Hoffmann Eitle
Patent- und Rechtsanwälte PartmbB
Arabellastraße 30
81925 München (DE)**

(56) References cited:
**US-A1- 2016 221 187**

• **CHEN H. ET AL: "3D free-form object recognition
in range images using local surface patches",
PATTERN RECOGNITION LETTERS, ELSEVIER,
AMSTERDAM, NL, vol. 28, no. 10, 15 July 2007
(2007-07-15) , pages 1252-1262, XP022069312,
ISSN: 0167-8655, DOI:
10.1016/J.PATREC.2007.02.009**
• **Scott A Starks: "VISUAL PERCEPTION AND
GRASPING FOR THE EXTRAVEHICULAR
ACTIVITY ROBOT", Final Report, National
Aeronautics and Space Administration
(NASA)/American Society for Engineering
Education (ASEE) Summer Faculty Fellowship
Program 1988, 1 February 1989 (1989-02-01),
pages 23.1-23.14, XP055625668, Retrieved from
the Internet:
URL:https://ntrs.nasa.gov/archive/nasa/cas
i.ntrs.nasa.gov/19890010711.pdf [retrieved on
2019-09-24]**

## Description

FIELD

Arrangements described herein relate generally to a handling device, a control device, and a program.

BACKGROUND

Automation of transfer operations in physical distribution sites requires the ability to hold and transport objects that have a wide variety of shapes, sizes, and weights. It is difficult to prepare exclusive hands appropriate for such a wide variety of objects in terms of cost, for example. For this reason, a single handling device that holds any one of a wide variety of objects is desired. However, for example, in a case where an object having a non-flatness surface is held, it may be difficult to stably hold the object.

US 2016/221187 A1 (BRADSKI GARY [US] ET AL) discloses a system for selecting a grasp point on an object, wherein characteristics of the object are identified and potential grasp points are determined based on said characteristics.

BRIEF DESCRIPTION OF THE DRAWINGS

FIG. 1 is a diagram illustrating a transport system including a handling device of a first embodiment.
FIG. 2 is a perspective view illustrating a holder of the first embodiment.
FIG. 3 is a bottom view illustrating an arrangement layout of a plurality of suckers of the first embodiment.
FIG. 4 is a diagram illustrating an example of a method of causing the holder to hold an object in the first embodiment.
FIG. 5 is a diagram illustrating another example of a method of causing the holder to hold an object in the first embodiment.
FIG. 6 is a diagram illustrating several examples of methods of causing the holder to hold objects in the first embodiment.
FIG. 7 is a block diagram illustrating a system configuration of a transport system of the first embodiment.
FIG. 8 is a diagram illustrating an example of an input mask image and a depth image of the first embodiment.
FIG. 9 is a diagram for expressing the depth image of the first embodiment.
FIG. 10 is a diagram illustrating a flow of a smoothing process of the depth image of the first embodiment.
FIG. 11 is a diagram illustrating a flow of a filling-in process of a loss point of the depth image of the first embodiment.
FIG. 12 is a diagram illustrating an example of the filling-in process of the loss point of the depth image of the first embodiment.
FIG. 13 is a diagram illustrating a model for obtaining a quadric surface of the surface of the object in the first embodiment.
FIG. 14 is a diagram illustrating a relationship between various curvatures and geometric models in the first embodiment.
FIG. 15 is a diagram illustrating degrees of priority which are set in the geometric models of the first embodiment.
FIG. 16 is a diagram illustrating several examples of holdable regions of the first embodiment.
FIG. 17 is a diagram illustrating an example of an output mask image of the first embodiment.
FIG. 18 is a flow chart illustrating a flow of processes in a holding plan generation unit of the first embodiment.
FIG. 19 is a front view illustrating a holder of a second embodiment.
FIG. 20 is a diagram illustrating degrees of priority which are set in geometric models of the second embodiment.

DETAILED DESCRIPTION

A transport system according to the present invention is defined in claim 1.

A method, according to the present invention, for controlling a transport system is defined in claim 12.

A program, according to the present invention, for realizing a controller of a transport system is defined in claim 13.

Hereinafter, a handling device, a control device, and a program of an embodiment will be described with reference to the accompanying drawings. Meanwhile, in the following description, components having the same or similar functions are denoted by the same reference numerals and signs. The description of these components may not be repeated. The wording "based on XX (or on the basis of XX)" as used in this specification means "based on at least XX," and also includes a case based on another element in addition to XX. In addition, the wording "based on XX (or on the basis of XX)" is not limited to "based directly on XX", but also represents "based on something that is acquired by an arithmetic operation or other process being performed on XX". Here, "XX" is an arbitrary element (for example, arbitrary information).

(First embodiment)

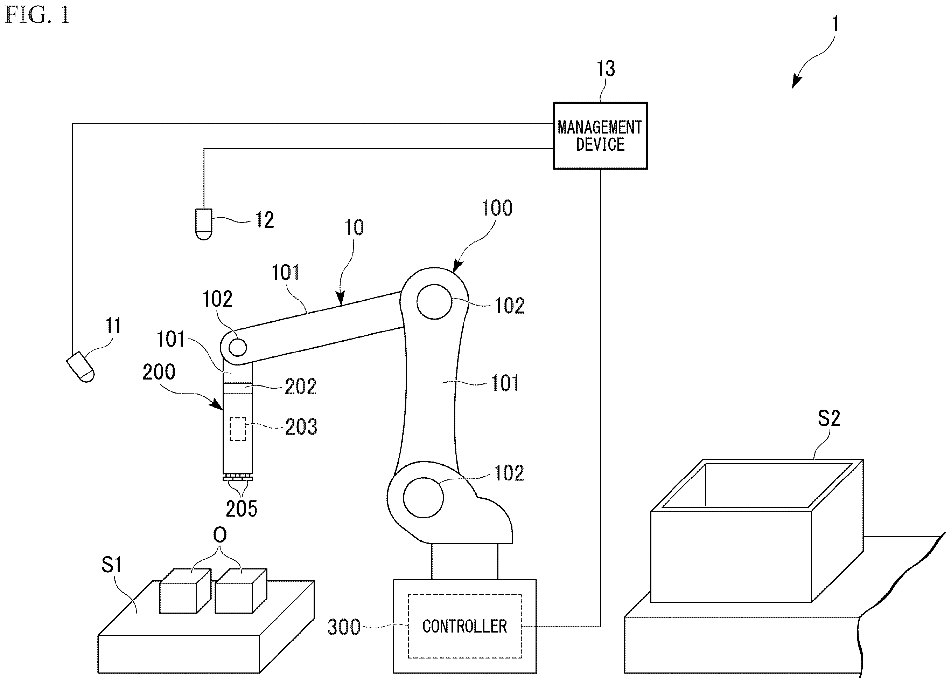

A first embodiment will be described with reference to FIGS. 1 to 18. FIG. 1 is a diagram illustrating a transport system 1 including a handling device 10 of the present embodiment. The transport system 1 is, for example, a handling system (picking system) for physical distribution. The transport system 1 moves objects (holding targets, transport targets, or work-pieces) O located at a movement source S1 to a movement destination S2.

The movement source S1 and the movement destination S2 are, for example, containers such as a tote bag, a collapsible container or a bin, various conveyors, or various pallets, but are not limited thereto. In the movement source S1, objects O having a wide variety of shapes, sizes, or weights are loaded randomly. In the present embodiment, there are a variety of objects O to be held ranging from those that are as small as 5 square cm to those that are as large as 30 square cm. In addition, there are a variety of objects O ranging from those that are as light as several tens of g to those that are as heavy as several kg. However, the sizes and weights of the objects O are not limited to the above examples.

Meanwhile, the handling device 10 and the transport system 1 can also be applied to an industrial robot system, other systems, or the like without being limited to the handling system for physical distribution. The terms "handling device" and "transport system" as used in the present specification are not limited to a device and a system using the transport of an object as a main object, and may be a device and a system accompanied by transport (movement) of an object as a part of product assembly or another object.

First, the entire configuration of the transport system 1 will be described.

As shown in FIG. 1, the transport system 1 includes, for example, the handling device 10, a first detector 11, a second detector (depth sensor) 12, and a management device 13.

The handling device (a holding device or a transport device) 10 is, for example, a robot device, holds an object O located at the movement source S1, and moves the held object O to the movement destination S2. The handling device 10 can communicate with the management device 13 in a wired or wireless manner. The details of the handling device 10 will be described later.

The first detector 11 and the second detector 12 are cameras or various sensors disposed near the movement source S1. The first detector 11 acquires image data of the object O. The term "image data" is an example of information indicating the outer shape of the object O located at the movement source S1. On the other hand, the second detector 12 acquires distance image data of the object O. The term "distance image data" is an example of information indicating a distance (depth) from any reference plane which is set above the movement source S1 to the surface of the object O.

The information detected by the first detector 11 and the second detector 12 is output to the management device 13. At least one of the first detector 11 and the second detector 12 may be provided as a part of the handling device 10. In this case, the information detected by the first detector 11 and the second detector 12 may be output directly to a controller 300 (to be described later) of the handling device 10.

The management device (upper-level controller) 13 manages and controls the entirety of the transport system 1. For example, the management device 13 acquires the information detected by the first detector 11 and the second detector 12, and outputs the acquired information to the handling device 10.

Next, the handling device 10 will be described.

As shown in FIG. 1, the handling device 10 includes, for example, a movement mechanism 100, a holder 200, and a controller (control device) 300.

The movement mechanism 100 is a mechanism that moves the holder 200 to a desired position. The movement mechanism 100 can change the posture of the holder 200. For example, the movement mechanism 100 is a six-axis vertical articulated robot arm, and includes a plurality of arm members 101 and a plurality of rotators 102 that rotatably connect the plurality of arm members 101 to each other. However, the movement mechanism 100 may be a triaxial orthogonal robot arm, or may be a mechanism that moves the holder 200 to a desired position using other components. For example, the movement mechanism 100 may be a flight object (for example, a drone) that lifts and moves the holder 200 using rotary blades.

The holder 200 is a holding mechanism that holds the object O located at the movement source S1. The holder 200 is connected to the movement mechanism 100 via a rotator 202 that is described later. For example, the holder 200 includes a suction device 203 and a plurality of suckers 205 communicating with the suction device 203, and holds the object O by suction. However, the holder 200 may be a holder that holds the object O by clamping.

In the present embodiment, an example in which the holder 200 includes the plurality of suckers 205 will be described. The sucker 205 is an example of an "attachment portion" that holds the object O in a state in which it is adhered to the object O. An example in which the holder 200 holds the object O by clamping will be described later as a second embodiment.

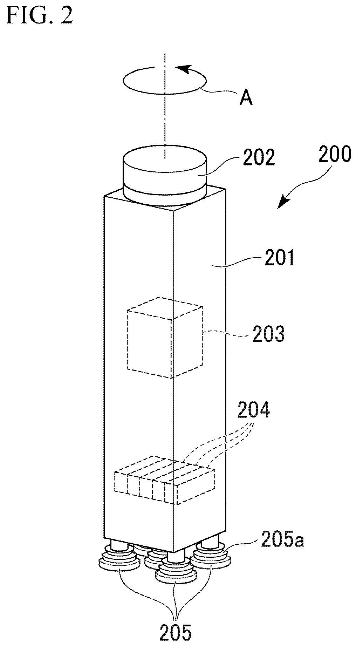

FIG. 2 is a perspective view illustrating the holder 200 of the present embodiment. The holder 200 includes, for example, a base 201, the rotator 202, the suction device 203, a plurality of switching valves 204, and the plurality of suckers 205 (for example, suction pads).

The base 201 has, for example, a cubic outer shape, and forms the contour of the holder 200. The base 201 is connected to the movement mechanism 100 via the rotator 202. The base 201 may be formed in a box shape, or may be constituted by only a frame.

The rotator 202 is provided between the base 201 and the movement mechanism 100, and rotatably connects the base 201 to the movement mechanism 100. The rotator 202 can rotate the base 201 of the holder 200 in an A direction in the drawing and the opposite direction with respect to the movement mechanism 100. Meanwhile, the rotator 202 may be provided as a part of the movement mechanism 100 rather than a part of the holder 200.

The suction device 203 is provided inside the base 201. The suction device 203 is, for example, a vacuum pump. The suction device 203 communicates with each of the plurality of suckers 205 through a hose or the like. Through driving of the suction device 203, a pressure within each of the suckers 205 becomes lower than atmospheric pressure, and the object O is adhered and held by the suckers 205.

The plurality of switching valves 204 are provided for the plurality of suckers 205 on a one-to-one basis. Each of the switching valves 204 can switch between a first state in which a corresponding sucker 205 and the suction device 203 are caused to communicate with each other and a second state in which communication between the sucker 205 and the suction device 203 is cut off and the sucker 205 is caused to communicate with the external portion (for example, atmospheric pressure space) of the handling device 10. In a case where the object O is relatively small, the handling device 10 causes only one or a few suckers 205 selected from among the plurality of suckers 205 to function as suckers 205 (hereinafter called "effective suckers 205E") used in holding. Meanwhile, in several diagrams to be described below, effective suckers 205E and other suckers 205 are distinguished from each other by hatching being added on the effective suckers 205E.

Each of the plurality of suckers 205 has an extendable structure. For example, each of the plurality of suckers 205 includes a bellows (extendable portion) 205a. The plurality of suckers 205 are disposed side by side at one end of the base 201. Each sucker 205 has an outer shape smaller than the smallest object to be located at the movement source S1. In a case where the object O is relatively small and light, the handling device 10 adheres to and holds the object O using only one or more effective suckers 205E selected from among the plurality of suckers 205. The present embodiment is an example in which the object O of 5 square cm can be laid at the movement source S1, and the sucker 205 has, for example, a circular shape with a diameter of 4 cm.

On the other hand, there is an upper limit to the weight of the object O that can be adhered and held by individual suckers 205. In a case where the object O is relatively large and heavy, the handling device 10 adheres to and holds the heavy object O by using two or more effective suckers 205 E together among the plurality of suckers 205. In the present embodiment, a weight capable of being adhered and held by one sucker 205 is, for example, approximately 2 kg. In the present embodiment, the holder 200 includes five suckers 205, and thus can hold the object O up to approximately 10 kg.

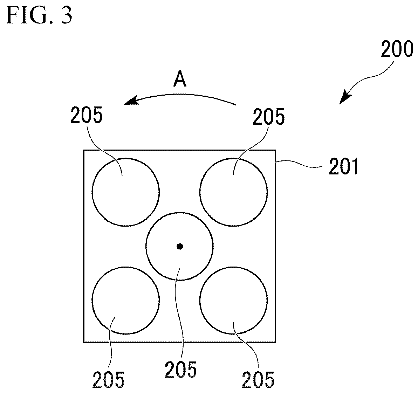

FIG. 3 is a bottom view illustrating an arrangement layout of the plurality of suckers 205 of the present embodiment. As described above, the holder 200 of the present embodiment includes five suckers 205. The five suckers 205 include one sucker 205 disposed substantially at the center of the holder 200 and four suckers 205 disposed separately around the one sucker 205 so as to correspond to four corners of the holder 200. These four suckers 205 can be rotated around the central shaft of the rotator 202 in the A direction and the opposite direction by the above-described rotator 202 being rotated.

Next, the controller 300 will be described. The controller 300 controls the whole operation of the handling device 10. Herein, first, the outlines of several functions of the controller 300 will be described.

As a first function, the controller 300 classifies the shape of the surface of the object O into a plurality of types (flat, curved surface (e.g., cylindrical surface, saddle surface, or the like), spherical surface, undulation, stepped difference, uneven (e.g., combination of a recess and a protrusion), protrusion, or the like) depending on one or more curvatures of the surface of the object O. The controller 300 changes a method of causing the holder 200 to hold the object O (for example, a method of causing the sucker 205 to come in contact with the object O) on the basis of the classified shapes of the surface of the object O.

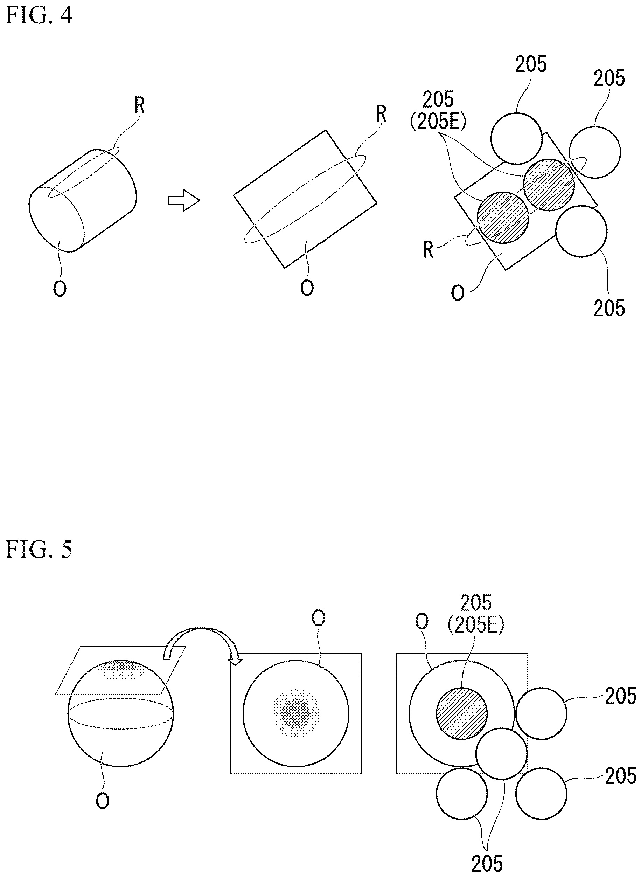

FIGS. 4 and 5 are diagrams illustrating examples of methods of causing the holder 200 to hold an object O. For example, FIG. 4 shows a case in which the surface of an object O is cylindrical. FIG. 5 shows a case in which the surface of an object O is spherical. The controller 330 uses different methods of causing the holder 200 to hold an object O in a case where the surface of an object O is cylindrical and a case where the surface of an object O is spherical. For example, in a case where the surface of an object O is cylindrical, the controller 300 brings a plurality of (for example, two) suckers 205 into contact with the object O and holds the object O. On the other hand, in a case where the surface of an object O is spherical, the controller 300 brings at least one sucker 205 into contact with the top portion of the object O and holds the object O.

In a case where the curvatures of the surface of the object O are different from each other in a plurality of directions, as a second function, the controller 300 determines the holding posture of the holder 200 so as to line up the plurality of suckers 205 in a direction in which the curvature is relatively small. For example, in the example shown in FIG. 4, the controller 300 determines the holding posture of the holder 200 so as to line up the plurality of suckers 205 along a cylindrical ridge portion R with respect to the cylindrical surface of the object O.

Next, the aforementioned first function will be described in more detail.

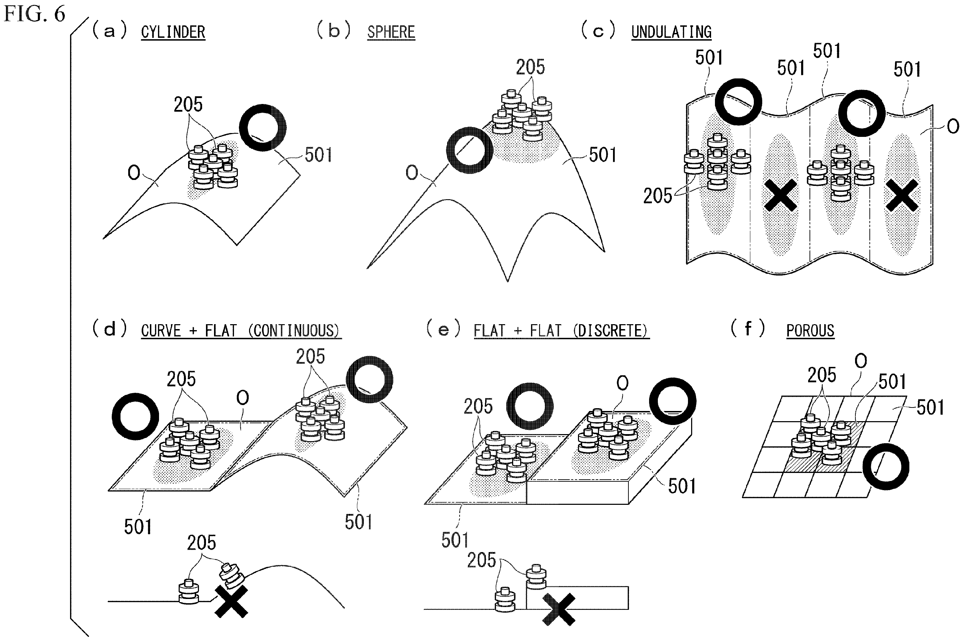

FIG. 6 is a diagram illustrating several examples of methods of causing the holder 200 to hold objects O. The controller 300 determines the following methods of holding objects O that has a non-flatness surface in accordance with the shapes of the surfaces of the objects O classified on the basis of one or more curvatures of each of the surfaces of the objects O. For example, in a case where the surface of the object O is cylindrical ((a) in FIG. 6), the controller 300 lines up the plurality of suckers 205 in the ridge line direction of the object O. In a case where the surface of the object O is spherical ((b) in FIG. 6), the controller 300 causes one sucker 205 to adhere to and hold the top portion of the object O. In a case where the surface of the object O is an undulation ((c) in FIG. 6), the controller 300 avoids a recess region at which it is difficult to bring the sucker 205 into contact with the object, and causes the plurality of suckers 205 to adhere to and hold a region that protrudes upward.

In addition, in a case where the surface of the object O is a combination of a flat surface and a curved surface ((d) in FIG. 6), the controller 300 avoids a boundary between the flat surface and the curved surface, and causes the plurality of suckers 205 to adhere to and hold any one of the flat surface and the curved surface. In a case where there is a stepped difference (a place having a discrete height) between a plurality of flat portions on the surface of the object O ((e) in FIG. 6), the controller 300 avoids the stepped differences, and causes the plurality of suckers 205 to adhere to and hold any one of the plurality of flat surfaces. In a case where the object O is a porous body ((f) in FIG. 6), the controller 300 avoids a region in which a large hole exceeding a threshold is open, and causes the plurality of suckers 205 to adhere to and hold one or more regions having only small holes of the threshold or less.

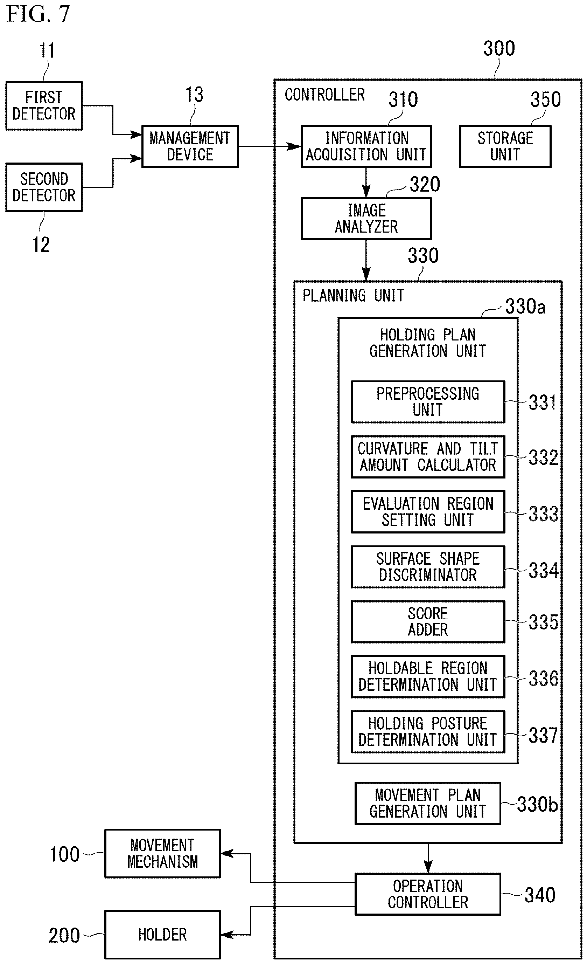

FIG. 7 is a block diagram illustrating a system configuration of the transport system 1. The controller 300 includes, for example, an information acquisition unit 310, an image analyzer 320, a planning unit 330, an operation controller 340, and a storage unit 350.

All or some of the respective functional units (for example, the information acquisition unit 310, the image analyzer 320, the planning unit 330, and the operation controller 340) of the controller 300 are realized by one or more processors such as, for example, a central processing unit (CPU) or a graphics processing unit (GPU) executing a program stored in the storage unit 350. However, all or some of these functional units may be realized using hardware (for example, circuitry) such as a large scale integration (LSI), an application specific integrated circuit (ASIC), a field-programmable gate array (FPGA), or a programmable logic device (PLD). In addition, all of some of the functional units may be realized by a combination of a software functional unit and hardware. The storage unit 350 is realized by a flash memory, an electrically erasable programmable read-only memory (EEPROM), a read-only memory (ROM), a random access memory (RAM), or the like.

The information acquisition unit 310 acquires the information detected by the first detector 11 and the second detector 12 from the management device 13. The term "acquire" as used in the present specification is not limited to a case in which information is acquired by outputting a send request, and also includes a case in which information is acquired by passive reception. The information acquisition unit 310 outputs the information acquired from the first detector 11 and the second detector 12 to the image analyzer 320.

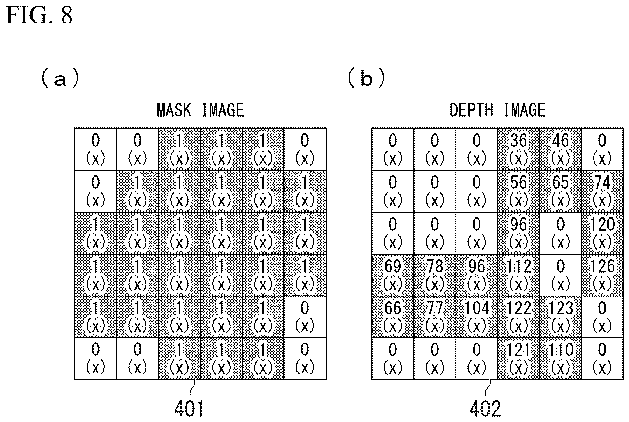

The image analyzer 320 generates various types of information used in information processing of the planning unit 330 on the basis of the information detected by the first detector 11 and the second detector 12. For example, the image analyzer 320 generates an input mask image 401 and a depth image 402 (see FIG. 8) which are input information to the planning unit 330 on the basis of image data and distance image data. The content of the input mask image 401 and the depth image 402 will be described later. Meanwhile, in a case where information equivalent to the input mask image 401 and the depth image 402 is obtained directly from the first detector 11 and the second detector 12, the image analyzer 320 may be omitted.

The planning unit 330 includes, for example, a holding plan generation unit 330a and a movement plan generation unit 330b. The holding plan generation unit 330a generates a holding plan for the holder 200 to hold the object O located at the movement source S1. The movement plan generation unit 330b generates a movement plan for the movement mechanism 100 to move the object O held by the holder 200 from the movement source S1 to the movement destination S2.

First, the holding plan generation unit 330a will be described. The holding plan generation unit 330a includes a preprocessing unit 331, a curvature and tilt amount calculator 332 (hereinafter called a "curvature calculator 332"), an evaluation region setting unit 333, a surface shape discriminator 334 (a surface shape determination unit, a surface shape determiner), a score adder 335, a holdable region determination unit 336 (a holdable region determiner), and a holding posture determination unit 337 (a holding posture determination unit 337).

The preprocessing unit 331 will be described. The input mask image 401 and the depth image 402 generated by the image analyzer 320 are input to the preprocessing unit 331. In some cases, the depth image 402 may include high-frequency noise. And, in some cases, the depth image 402 may include one or more outlier values and/or data loss caused by an imaging defect. For this reason, the preprocessing unit 331 performs filling-in on the loss portion of the depth image 402, and further performs a smoothing process on the depth image 402 to thereby remove the high-frequency noise and the one or more outlier values.

FIG. 8 is a diagram illustrating an example of the input mask image 401 and the depth image (depth map) 402 which are input to the preprocessing unit 331. The input mask image 401 is a mask image in which information of the surface of the object O is represented by "0" and "1." That is, a square to which "1" is input indicates that the surface of the object O is present. A square to which "0" is input indicates that the surface of the object O is not present. On the other hand, the depth image 402 is an image in which the height position of the surface of the object O is represented by 1 to 255 gradations. The squares of the input mask image 401 and the squares of the depth image 402 correspond to each other in a one-to-one correspondence.

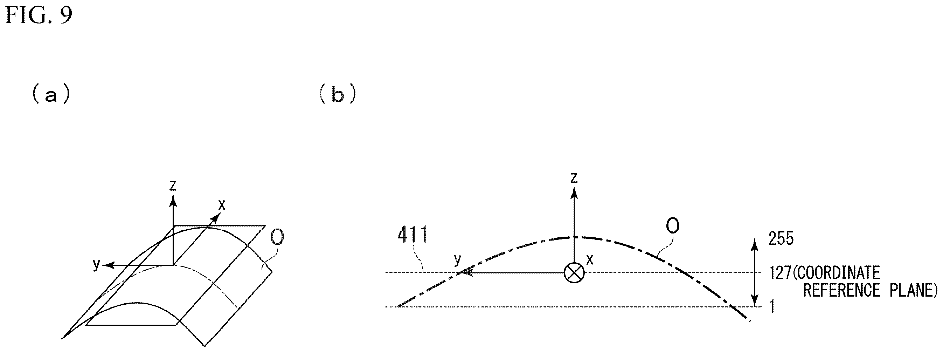

FIG. 9 is a diagram illustrating the depth image 402. Here, (a) in FIG. 9 shows a coordinate reference plane 411 (for example, a plane along a horizontal plane) which is set with respect to the surface of the object O. In addition, (b) in FIG. 9 shows a depth or altitude (hereinafter, these are called "depth" collectively) of the surface of the object O with respect to the coordinate reference plane 411. The depth image 402 is information indicating the height positions of the surface of the object O, and is information in which the height position of each square with respect to the coordinate reference plane 411 is digitized (i.e., quantified). In the depth image 402, the height position of each square with respect to the coordinate reference plane 411 is divided into 255 gradations. The depth image 402 is obtained on the basis of, for example, the distance image data detected by the second detector 12. Meanwhile, a point at which information is not able to be acquired by the second detector 12 is regarded as a loss of data (i.e., the loss portion of the depth image 402), and "0" is imparted to the point of the loss of data as information.

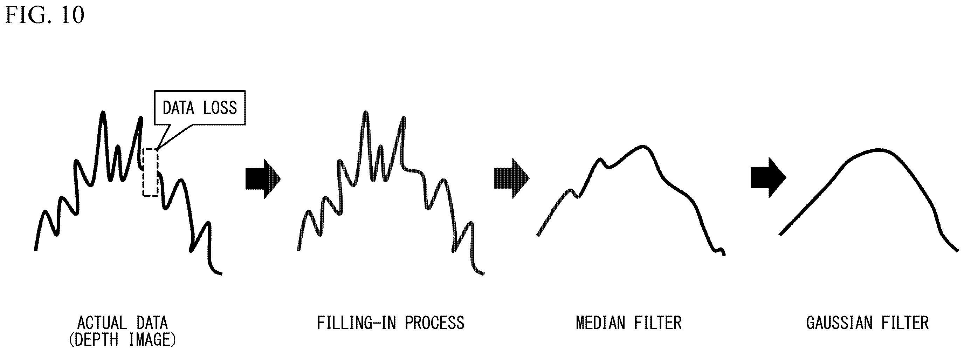

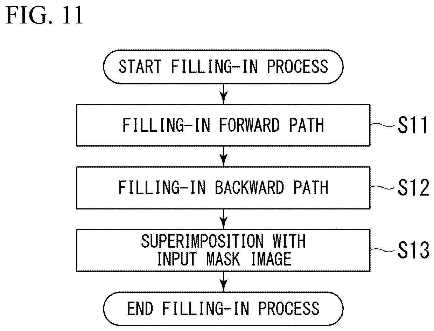

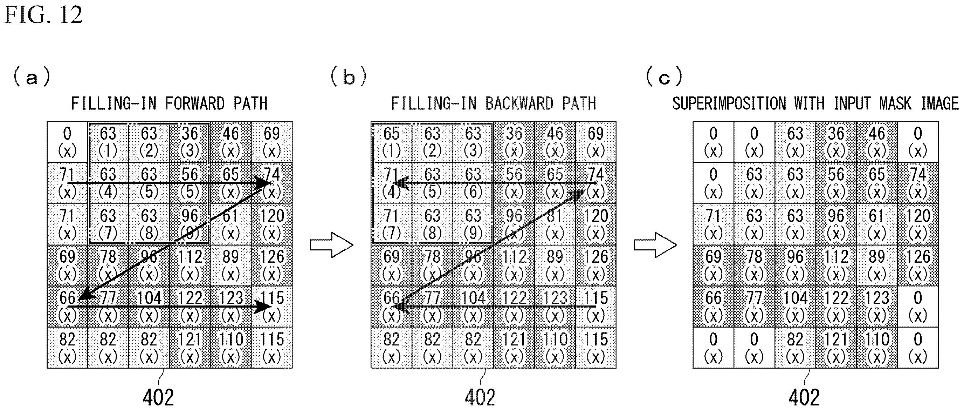

FIG. 10 is a diagram illustrating a flow of a filling-in on the loss portion (i.e., data loss point) of the depth image 402 and a smoothing process of the depth image 402 which is performed by the preprocessing unit 331. The preprocessing unit 331 performs a filling-in process of filling-in the loss point of data of the depth image 402 with respect to the input depth image 402. This filling-in process will be described later with reference to FIGS. 11 and 12. Next, the preprocessing unit 331 performs smoothing using a median filter and further performs smoothing using a Gaussian filter with respect to data on which the filling-in process is performed. Thereby, the high-frequency noise and the one or more outlier values included in the depth image 402 are removed.

FIG. 11 is a diagram illustrating a flow of a filling-in process of the data loss point of the depth image 402. The filling-in process includes a process of a filling-in forward path (S11), a process of a filling-in backward path (S 12), and a superimposition process of the input mask image 401 and the depth image 402 (S13).

FIG. 12 is a diagram illustrating an example of the filling-in process of the data loss point of the depth image 402. The filling-in of the data loss point is performed by, for example, substituting a mean value of values around the data loss point into the square of the data loss point. In an example relating to the present embodiment, nine squares of a 3×3 matrix are set as one unit. In the filling-in of a certain data loss point, a mean value of squares to which values other than 0 among the remaining eight squares of the 3×3 matrix where the data loss point is located at the upper-left corner are input is used. In the shown example, in a case where data loss points are present outside of the upper-left corner in the 3×3 matrix, filling-in is also performed on the data loss points using the same mean value.

In the process of a filling-in forward path shown in (a) in FIG. 12, the filling-in process of the data loss is performed on a point to which "0" is input in the depth image 402 while shifting to the right side by one square from a starting point starting with the upper-left square of the depth image 402 as its starting point. In a case where a one-row process is completed, the same process is repeated moving one row below.

In a case where the process of a filling-in forward path is completed, a process of a filling-in backward path shown in (b) in FIG. 12 is performed next. In the process of a filling-in backward path, the filling-in process of the data loss is performed on a point to which "0" is input in the depth image 402 while shifting one square to the left from a starting point with the lower-right square of the depth image 402 as a starting point. In a case where a one-row process is completed, the same process is repeated moving one row above. By performing such a process of a filling-in backward path, the filling-in process can also be performed on a square on which the filling-in of a data loss is not able to be performed in the process of a filling-in forward path (for example, a square on the upper-left corner).

Next, in a case where the process of a filling-in forward path and the process of a filling-in backward path are completed, the preprocessing unit 331 performs a superimposition process of the input mask image 401 and the depth image 402 shown in (c) in FIG. 12. In this superimposition process, the input mask image 401 and the depth image 402 on which filling-in is performed are compared with each other, the values of squares of the depth image 402 corresponding to squares to each of which "1" is input in the input mask image 401 remain as they are, and the values of squares corresponding to squares to each of which "0" is input in the input mask image 401 are deleted. Thereby, unnecessary values that do not correspond to the surface of an actual object O are deleted in the depth image 402. An image on which preprocessing has been performed by the preprocessing unit 331 is output to the curvature calculator 332.

Next, the curvature calculator 332 will be described. The curvature calculator 332 obtains quadric surfaces of local surfaces (i.e., local regions of the surface) of the object O on the basis of the depth image 402 on which preprocessing has been performed, and calculates various curvatures (for example, mean curvature, Gaussian curvature, maximum curvature, and minimum curvature) and the amount of tilt of each of the local surfaces of the object O.

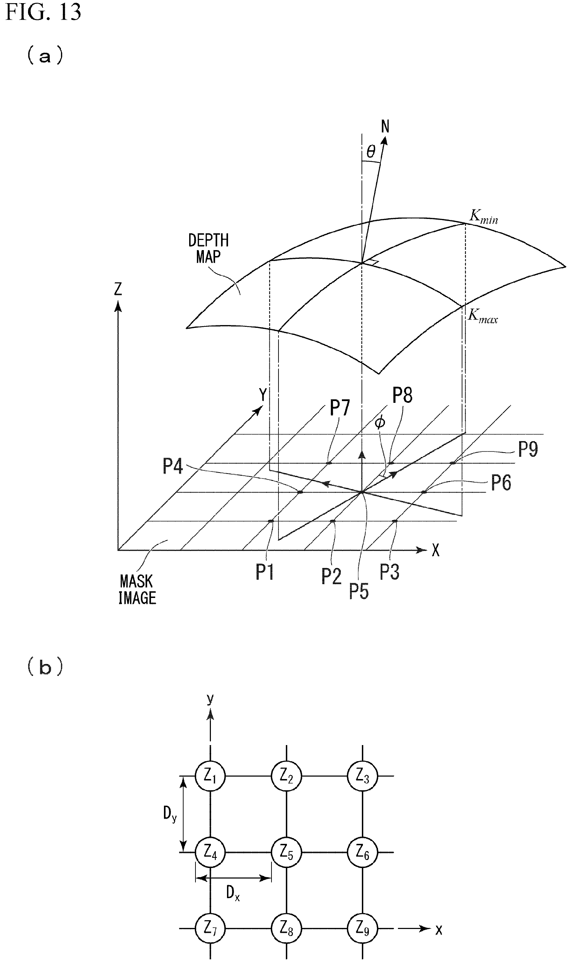

FIG. 13 is a diagram illustrating a model for obtaining a quadric surface of the local surface of the object O. Here, (a) in FIG. 13 shows the model three-dimensionally. In addition, (b) in FIG. 13 shows grids on the XY plane corresponding to the model. N in the drawing is a normal line vector (i.e., normal vector) of the local surface of the object O. In addition, $\theta$ in the drawing is a tilt angle of the normal line vector with respect to a vertical direction. In addition, $\varphi$ in the drawing is a tilt angle in a direction in which a minimum curvature ($K_{min}$) in a Y direction is present. The grids in the drawing are discretized (i.e., separated) by a step width ($D_x$, $D_y$) considering the scale of the sucker 205. For example, in a case where the diameter of the sucker 205 is 4 cm, a distance between a point P1 and a point P3 is 4 cm, and a distance between the point P1 and a point P7 is 4 cm.

In FIG. 13, a quadric surface that covers eight surrounding points centering on a point P5 which is a point of interest is obtained on the basis of depths of point P1 to a point P9 (values on the depth image 402 corresponding to the point P1 to the point P9) $Z_1$ to $Z_9$. Various curvatures (mean curvature, Gaussian curvature, maximum curvature, and minimum curvature) and the amount of tilt at the point P5 are calculated according to the following expression.

$$y = ax^2 + by^2 + cxy + dx + ey + f \qquad \cdots (1)$$

Here, coefficients a to f in Expression (1) are calculated according to the following expressions.

$$a = \frac{1}{2}\frac{\partial^2 z}{\partial x^2} = \frac{(Z_1 + Z_3 + Z_4 + Z_6 + Z_7 + Z_9)}{12\Delta x^2} - \frac{(Z_2 + Z_5 + Z_8)}{6\Delta x^2} \qquad \cdots (2)$$

$$b = \frac{1}{2}\frac{\partial^2 z}{\partial y^2} = \frac{(Z_1 + Z_2 + Z_3 + Z_7 + Z_8 + Z_9)}{12\Delta x^2} - \frac{(Z_4 + Z_5 + Z_6)}{6\Delta x^2} \qquad \cdots (3)$$

$$c = \frac{\partial^2 z}{\partial x \partial y} = \frac{(Z_3 + Z_7 - Z_1 - Z_9)}{4\Delta x^2} \qquad \cdots (4)$$

$$d = \frac{\partial z}{\partial x} = \frac{(Z_3 + Z_6 + Z_9 - Z_1 - Z_4 - Z_7)}{6\Delta x} \qquad \cdots (5)$$

$$e = \frac{\partial z}{\partial y} = \frac{(Z_1 + Z_2 + Z_3 - Z_7 - Z_8 - Z_9)}{6\Delta x} \qquad \cdots (6)$$

$$f = \frac{2(Z_2 + Z_4 + Z_6 + Z_8) - (Z_1 + Z_3 + Z_7 + Z_9) + 5Z_5}{9} \qquad \cdots (7)$$

Here, $Z_1$ to $Z_9$ indicate the depths of the point P1 to the point P9.

In a case where coefficients in Expressions (2) to (7) are determined, the mean curvature ($K_m$) and the Gaussian curvature ($K_g$) are obtained by the following expressions.

$$K_m = \frac{a(1 + e^2) - cde + b(1 + d^2)}{(1 + d^2 + e^2)^{\frac{3}{2}}} \qquad \cdots (8)$$

$$K_g = \frac{4ab - c^2}{(1 + d^2 + e^2)^2} \qquad \cdots (9)$$

Further, the maximum curvature ($K_{max}$) and the minimum curvature ($K_{min}$) are obtained by the following expressions on the basis of the mean curvature and the Gaussian curvature.

$$K_{max} = K_m + \sqrt{K_m{}^2 - K_g} \qquad \cdots (10)$$

$$K_{min} = K_m - \sqrt{K_m{}^2 - K_g} \qquad \cdots (11)$$

The maximum amount of tilt S ($S_x$, $S_y$) of the quadric surface is obtained by the following expressions using $Z_1$ to $Z_9$.

$$S_x = \frac{(z_1 + z_4 + z_7) - (z_3 + z_6 + z_9)}{6D_x} \qquad \cdots (12)$$

$$S_y = \frac{(z_1 + z_2 + z_3) - (z_7 + z_8 + z_9)}{6D_y} \qquad \cdots (13)$$

The minimum amount of tilt of the local surface of the object O is obtained by rotating the maximum amount of tilt S obtained in the above expressions by 90 degrees. The minimum amount of tilt is a direction in which a curvature is smallest on the surface of the object O. By lining up the plurality of suckers 205 in this direction, the object O can be adhered and held by the plurality of suckers 205 while suppressing the separation of the plurality of suckers 205 from the surface of the object O. Information indicating various curvatures and the amount of tilt calculated by the curvature calculator 332 are output to the evaluation region setting unit 333, the surface shape discriminator 334, and the holdable region determination unit 336.

Next, the evaluation region setting unit 333 will be described. The evaluation region setting unit 333 sets one or more evaluation target regions 501 with respect to the surface of the object O. The evaluation target region 501 is a region of one unit by which the shape of the surface of the object O is classified by the surface shape discriminator 334 that is described later. In a case where the surface of the object O is cylindrical or spherical ((a) and (b) in FIG. 6), the evaluation region setting unit 333 sets one evaluation target region 501 with respect to the surface of the object O.

On the other hand, in a case where the surface of the object O has an undulation, a combination of a flat surface and a curved surface, a shape in which a stepped difference is present between a plurality of flat surfaces, a shape including a region in which one or more large holes are open and a region in which one or more small holes are open, or the like ((c), (d), (e), and (f) in FIG. 6), the evaluation region setting unit 333 sets two or more evaluation target regions 501 on the surface of one object O. For example, in a case where the surface of the object O is undulating, the evaluation region setting unit 333 sets individual evaluation target regions 501 in a protrusion region and a recess region. In a case where the surface of the object O is a combination of a flat surface and a curved surface, the evaluation region setting unit 333 sets individual evaluation target regions 501 in a flat surface and a curved surface. In a case where the surface of the object O has a stepped difference between a plurality of flat surfaces, the evaluation region setting unit 333 sets individual evaluation target regions 501 on the plurality of flat surfaces. In a case where the surface includes a region in which one or more large holes are open and a region in which one or more small holes are open, the evaluation region setting unit 333 sets individual evaluation target regions 501 in the region in which one or more large hole are open and the region in which one or more small hole are open.

The evaluation region setting unit 333 divides the surface of one object O into two or more evaluation target regions 501 on the basis of, for example, at least one of various curvatures and the amount of tilt calculated by the curvature calculator 332 and the depth image 402 (depth information), and sets two or more evaluation target regions 501 with respect to the surface of one object O.

For example, in a case where the object O has an undulating surface including a combination of convex portions and convex portions, Gaussian curvatures and a mean curvature at the top of a protrusion portion and the bottom of a concave portion are set to zero (umbilical point). On the basis of contour lines with respect to a point (umbilical point) at which the Gaussian curvature or the mean curvature is set to zero, the evaluation region setting unit 333 separates two or more regions by a height from the point (umbilical point) at which the curvature is set to the zero being divided in a form in which a region less than a first threshold height is set to a region A, a region equal to or greater than the first threshold height and less than a second threshold height is set to a region B, and so on.

In addition, the evaluation region setting unit 333 may calculate a line of curvature which is a line on which a tangent vector at a certain point is coincident with the main direction of the point, and separate two or more regions by a closed curve or an open curve surrounded by the calculated line of curvature. Meanwhile, on separating a region, for example, a threshold regarding the height of a region is provided, shape is separated using a relationship between a region based on a line of curvature and the positive or negative of a umbilical point, or the like so as not to straddle a curved surface and a flat surface.

Thereby, in a case where the surface of the object O has a combination a flat surface and a curved surface ((d) in FIG. 6), the evaluation region setting unit 333 does not set an evaluation target region 501 straddling a boundary between the flat surface and the curved surface, and sets evaluation target regions 501 on the flat surface and the curved surface, individually. In addition, in a case where the surface of the object O has a shape in which a stepped difference is present between a plurality of flat surfaces ((e) in FIG. 6), the evaluation region setting unit 333 does not set an evaluation target region 501 straddling the stepped difference between the plurality of flat surfaces, and sets evaluation target regions 501 on the plurality of flat surfaces, individually. In addition, in a case where the object O is a porous body ((f) in FIG. 6), the evaluation region setting unit 333 does not set an evaluation target region 501 straddling a region in which a large hole exceeding a threshold is open and a region having only a small hole of the threshold or less, and sets evaluation target regions 501 in the region in which a large hole exceeding the threshold is open and the region having only a small hole of the threshold or less, individually. Regarding these evaluation target regions 501, the degree of priority is determined on the basis of a score added by the score adder 335 that is described later, and a region held by the holder 200 is determined (selected).

Next, the surface shape discriminator 334 will be described. The surface shape discriminator 334 classifies the shape of a surface in the evaluation target region 501 on the basis of, for example, information indicating the positive or negative curvature of the object O calculated by the curvature calculator 332. In a case where two or more evaluation target regions 501 are set on the surface of the object O, the surface shape discriminator 334 classifies the shape of a surface for each evaluation target region 501.

In the present embodiment, the surface shape discriminator 334 statistically processes various curvatures, the maximum amounts of tilt, and the minimum amounts of tilt of the local surfaces of the object O calculated by the curvature calculator 332 throughout the entirety of the evaluation target region 501, to thereby calculate median values of various curvatures, the maximum amount of tilt, and the minimum amount of tilt in the evaluation target region 501. The median value provides representative values of various curvatures, the maximum amount of tilt, and the minimum amount of tilt in the evaluation target region 501 which are obtained by statistical processing.

The surface shape discriminator 334 classifies the surface of the object O as a flat surface, a curved surface, or the like (e.g., a flat surface, a cylindrical surface, a spherical surface, a saddle surface, or the like) on the basis of information such as the positive / negative or value of 0 (zero) of median values of various curvatures obtained in regard to the evaluation target region 501. In the present embodiment, the surface shape discriminator 334 discriminates (i.e., determines) which geometric model among a plurality of geometric model the shape of the surface of the object O corresponds to on the basis of median values of an inflection point and an extreme value of curvature obtained for the evaluation target region 501. Meanwhile, in the following description, the term "curvature" means a median value of curvature obtained for the evaluation target region 501.

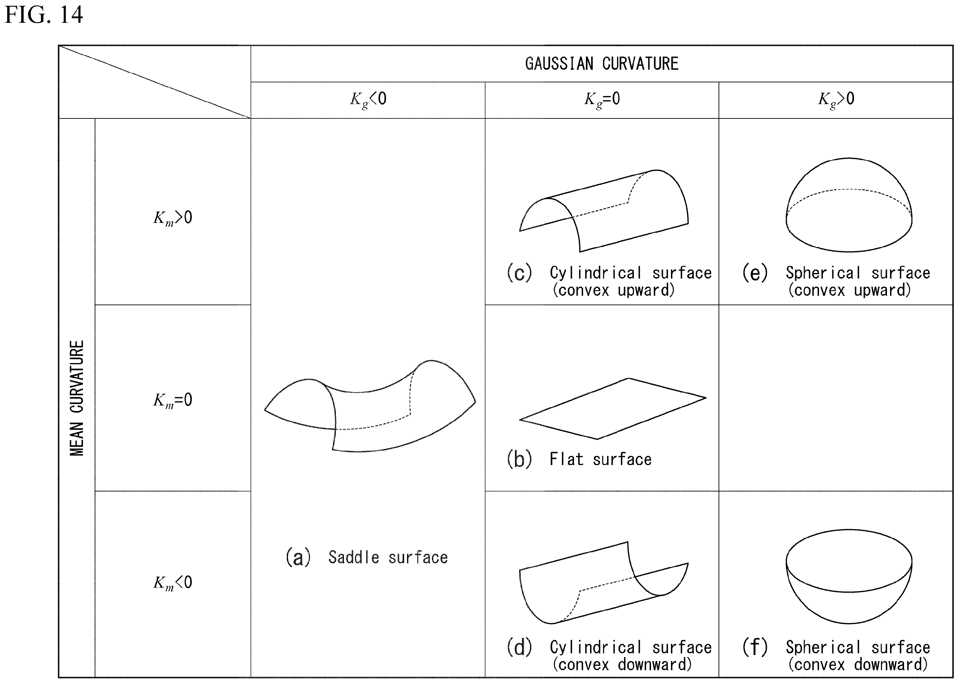

FIG. 14 is a diagram illustrating a relationship between various curvatures and geometric models. In the present embodiment, the surface shape discriminator 334 classifies the shape of the surface of the object O (the shape of the evaluation target region 501) into (a) a saddle surface, (b) a flat surface, (c) a cylindrical surface that is convex upward, (d) a cylindrical surface that is convex downward, (e) a spherical surface that is convex upward, and (f) a spherical surface that is convex downward on the basis of the Gaussian curvature ($K_g$), the mean curvature ($K_m$), the maximum curvature ($K_{max}$), and the minimum curvature ($K_{min}$) of the surface of the evaluation target region 501. For example, the flat surface has a surface in which both the mean curvature and the Gaussian curvature are 0, or both the maximum curvature and the minimum curvature are 0. The curved surface is classified into a cylindrical surface, a dome surface, a saddle surface, or a bowl surface depending on the positive or negative of the mean curvature and the Gaussian curvature, or the maximum curvature and the minimum curvature. Since actual calculation results are not set to ideal values, the surface shape is discriminated by providing a threshold. Information indicating geometric models classified by the surface shape discriminator 334 and information indicating median values or the like of various curvatures and the amount of tilt obtained for the evaluation target region 501 are output to the score adder 335, the holdable region determination unit 336, and the holding posture determination unit 337.

Next, the score adder 335 will be described. The score adder 335 adds a score indicating the degree of priority such as which portion on the surface of the object O is preferentially held to the surface (evaluation target region 501) of the object O. The score adder 335 adds a score to the surface of the object O on the basis of, for example, the geometric models classified by the surface shape discriminator 334. In a case where a plurality of evaluation target regions 501 are set on the surface of the object O, the score adder 335 adds a score for each evaluation target region 501.

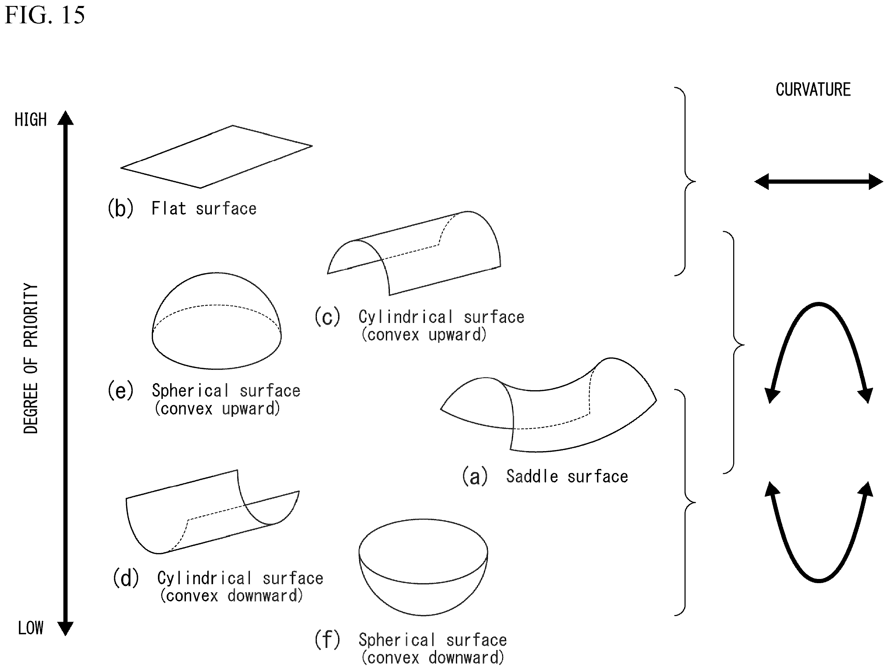

FIG. 15 is a diagram illustrating a degree of priority (high or low score) which is set in each geometric model. As shown in FIG. 15, a highest score is added to a flat surface, and next, a high score is added to a geometric model that is convex upward (for example, a cylindrical surface that is convex upward). On the other hand, a low score is added to a geometric model that is convex downward (for example, a spherical surface that is convex downward). Thereby, when the sucker 205 is brought into contact with the object O from above, the sucker 205 can be preferentially brought into contact with a place having a high surface in the object O or a region in which a flat surface is present.

Meanwhile, the score adder 335 may add a score on the basis of one or more various curvatures or the amount of tilt of the surface (the surface of the evaluation target region 501) of the object O instead of the geometric models classified by the surface shape discriminator 334. That is, it can be understood how much curvature the surface of the object O has or in which direction the surface is bent by using the mean curvature and the Gaussian curvature, or the maximum curvature and the minimum curvature. Using this fact, the score adder 335 may add a high score to, for example, a region in which curvature is 0 or greater than 0. Thereby, the sucker 205 can be preferentially brought into contact with a region having a ridge line or a region having a high peak on the surface of the object O.

In addition to the above-described process, the score adder 335 may add, for example, a higher score to the surface of the object O as the curvature of the surface of the object O becomes smaller. Thereby, the sucker 205 can also be preferentially brought into contact with a gentle curved surface on a curved surface.

The score adder 335 outputs information, indicating an evaluation target region 501 to which a highest score (or a score equal to or greater than a threshold) is added among a plurality of evaluation target regions 501, to the holdable region determination unit 336. Thereby, in a case where there are a plurality of evaluation target regions 501, the controller 300 can set a holdable region 601 in which the object O is held by the holder 200 within an evaluation target region 501 to which a highest score (or a score equal to or greater than the threshold) is added among the plurality of evaluation target regions 501.

Next, the holdable region determination unit 336 will be described. The holdable region determination unit 336 sets a portion of or the entire region within the evaluation target region 501 as the holdable region 601 in accordance with the shape of the surface of the object O. The holdable region 601 is a region in which at least one (two or more if possible) sucker 205 can adhere to and hold the object O on the surface of the object O. The holdable region determination unit 336 determines the holdable region 601 on the basis of an extendable distance of each of the suckers 205 (for example, an extendable distance of the bellows 205a) and the curvature of the surface of the object O.

For example, the holdable region determination unit 336 determines whether two or more suckers 205 can be brought into contact with the surface of the object O or only one sucker 205 can be brought into contact with the surface of the object O on the basis of the amount of compression of the bellows 205a of the sucker 205 from a highest point (for example, a ridge line) of the surface of the evaluation target region 501 and the curvature of the object O in a direction in which two or more suckers 205 are lined up, and sets the holdable region 601 on the basis of the determination result.

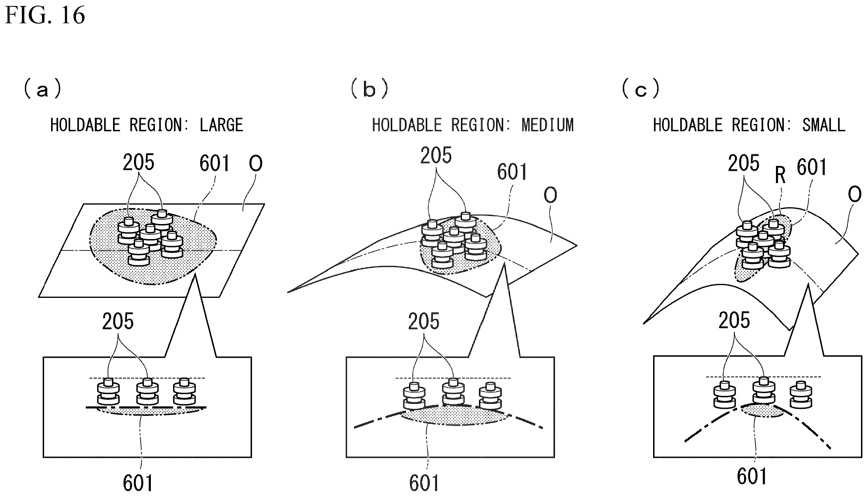

FIG. 16 is a diagram illustrating several examples of holdable regions 601. Here, (a) in FIG. 16 shows a case in which the surface of the object O has a flat surface. In this case, the holdable region determination unit 336 sets a wide holdable region 601 in which all the suckers 205 can adhere to and hold the object O. In addition, (b) in FIG. 16 shows a case in which the surface of the object O has a small curvature equal to or less than a predetermined value. In this case, the holdable region determination unit 336 sets a narrow holdable region 601 in which all the suckers 205 can adhere to and hold the object O. In addition, (c) in FIG. 16 shows a case in which the surface of the object O has a large curvature exceeding the predetermined value. In this case, the holdable region determination unit 336 sets a holdable region 601 in which some of the suckers 205 included in the holder 200 can adhere to and hold the object O. In this case, the holdable region 601 is set to be elongated along a direction (ridge portion R) in which a curvature is small on the surface of the object O.

In the present embodiment, in a case where a plurality of evaluation target regions 501 are present on the surface of the object O, the holdable region determination unit 336 preferentially sets the holdable region 601 within the evaluation target region 501 (that is, a flat surface or a region that is protruded upward) with a curvature of zero or a positive value among the plurality of evaluation target regions 501, to thereby cause holder 200 to hold that region.

In the present embodiment, in a case where a discontinuous position at which a curvature changes discontinuously is present on the surface of the object O, the holdable region determination unit 336 determines the holding position of the holder 200 so that the plurality of suckers 205 do not straddle the discontinuous position. In this case, the curvature means a curvature of the local surface of the object O calculated by the curvature calculator 332. The discontinuous position is, for example, a boundary between a flat surface and a curved surface in a case where the surface of the object O has a combination of the flat surface and the curved surface ((d) in FIG. 6) or a stepped difference in a case where there is a stepped difference (a place having a discrete height) between a plurality of flat surfaces ((e) in FIG. 6).

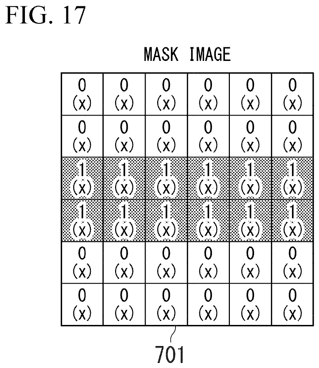

FIG. 17 shows an example of an output mask image 701 which is output information output by the holdable region determination unit 336. In the output mask image 701, "1" is input to a square corresponding to the holdable region 601, and "0" is input to a square deviating the holdable region 601. The holdable region determination unit 336 outputs the generated output mask image 701 to the holding posture determination unit 337 and the operation controller 340.

Next, the holding posture determination unit 337 will be described. The holding posture determination unit 337 determines the holding posture of the holder 200 with respect to the object O. In a case where the surface of the object O has a first curvature in a first direction and has a second curvature larger than the first curvature in a second direction different from the first direction, the holding posture determination unit 337 determines the holding posture of the holder 200 so as to line up at least two suckers 205 (for example, as many suckers 205 as possible) included in the holder 200 in the first direction. The first direction is a direction (direction in which a minimum curvature is present) in which a curvature is smallest on the surface of the object O.

For example, the holding posture determination unit 337 determines the holding posture of the holder 200 on the basis of the minimum amount of tilt of the holdable region 601. The wording "minimum amount of tilt of the holdable region 601" is, for example, a median value of the minimum amounts of tilt obtained by the minimum amounts of tilt of the local surfaces of the object O calculated by the curvature calculator 332 being statistically processed in the holdable region 601 (or the evaluation target region 501). The holding posture determination unit 337 determines the holding posture of the holder 200 so as to line up the at least two suckers 205 (for example, as many suckers 205 as possible) included in the holder 200 in a direction in which the minimum amount of tilt is present in the holdable region 601. The holding posture determination unit 337 outputs information indicating the determined holding posture of the holder 200 to the operation controller 340.

In the present embodiment, the holding posture determination unit 337 determines the first direction in which the at least two suckers 205 included in the holder 200 are lined up on the basis of geometric models (a flat surface, a cylindrical surface, a spherical surface, a saddle surface, or the like) classified on the basis of one or more inflection points and one or more extreme values of the curvature of the surface of the object O. That is, in a case where the surface shape of the object O is cylindrical, the holding posture determination unit 337 lines up at least two suckers 205 included in the holder 200 in a direction along the cylindrical ridge line.

In the present embodiment, the holding posture determination unit 337 changes a method of causing the holder 200 to hold the object O on the basis of information indicating the positive or negative curvature of the surface of the object O. For example, in a case where the surface of the object O is cylindrical, the holding posture determination unit 337 lines up the plurality of suckers 205 along the cylindrical ridge line, brings the plurality of suckers 205 into contact with the object O, and holds the object O. On the other hand, in a case where the surface of the object O is spherical, the holding posture determination unit 337 brings one sucker 205 into contact with the top portion of the object O and holds the object O.

Next, the movement plan generation unit 330b will be described. The movement plan generation unit 330b generates a movement plan to move the object O held by the holder 200 from the movement source S1 to the movement destination S2 on the basis of information relating to the movement source S1 and the movement destination S2 of the object O. In the present embodiment, the movement plan generation unit 330b also generates the movement plan on the basis of the holdable region 601, the holding posture of the holder 200, and the like determined by the holding plan generation unit 330a.

Next, the operation controller 340 will be described. The operation controller 340 controls the holder 200 and the movement mechanism 100 on the basis of the holding plan and the movement plan planned by the planning unit 330. For example, the operation controller 340 controls the movement mechanism 100 and the holder 200 on the basis of the holding plan generated by the holding plan generation unit 330a, and holds the object O in the holding posture of the holder 200 determined by the holding plan generation unit 330a. The operation controller 340 controls the movement mechanism 100 and the holder 200 on the basis of the movement plan generated by the movement plan generation unit 330b, and moves the object O to the movement destination S2.

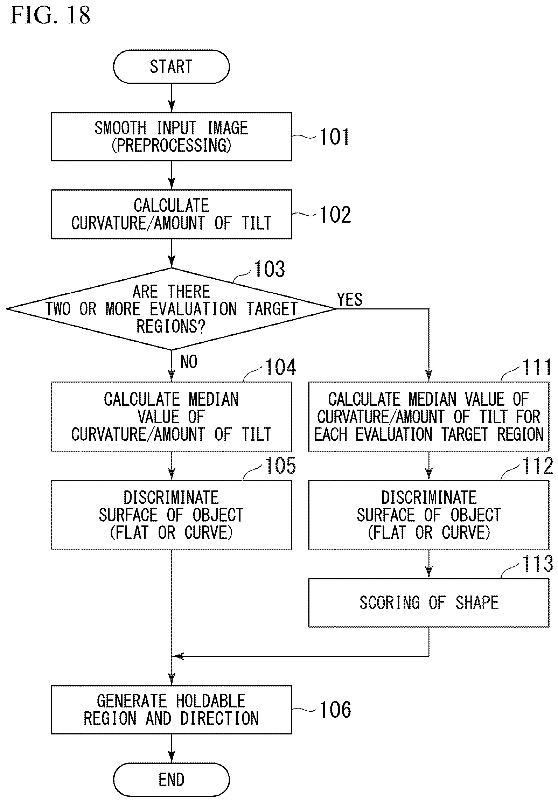

Next, a flow of processes in the holding plan generation unit 330a will be described. FIG. 18 is a flow chart illustrating a flow of processes in the holding plan generation unit 330a. First, the preprocessing unit 331 performs the filling-in process and the smoothing process on the data loss with respect to the input depth image 402 (S101). Next, the curvature calculator 332 calculates the local curvatures (i.e., curvatures of the local surface) and the amount of tilt of the object O (S102). Next, the evaluation region setting unit 333 determines whether two or more evaluation target regions 501 is to be set with respect to the object O (S103).

In a case where there is one evaluation target region 501 which is set with respect to the object O (S103: NO), the surface shape discriminator 334 statistically processes various local curvatures, the maximum amounts of tilt, and the minimum amounts of tilt in the evaluation target region 501, and thus obtains the median values of various curvatures, the maximum amount of tilt, and the minimum amount of tilt in the evaluation target region 501 (S104). The surface shape discriminator 334 discriminates the shape of the surface of the object O (for example, classifies the shape into geometric models) on the basis of the median values of various curvatures, the maximum amount of tilt, and the minimum amount of tilt in the evaluation target region 501 (S105). Next, the holdable region determination unit 336 sets the holdable region 601 within the evaluation target region 501 on the basis of the median values of various curvatures, the maximum amount of tilt, and the minimum amount of tilt obtained in the evaluation target region 501, and the extendable distance of the sucker 205. In addition, the holding posture determination unit 337 determines the holding posture of the holder 200 on the basis of the median values of various curvatures, the maximum amount of tilt, and the minimum amount of tilt obtained in the evaluation target region 501 (S106).

On the other hand, in a case where there are two or more evaluation target regions 501 which are set with respect to one object O (S103: YES), the surface shape discriminator 334 statistically processes various local curvatures, the maximum amounts of tilt, and the minimum amounts of tilt for each evaluation target region 501, and thus obtains the median values of various curvatures, the maximum amount of tilt, and the minimum amount of tilt for each evaluation target region 501 (S 1 11). The surface shape discriminator 334 discriminates the shape of the surface of the object O (for example, classifies the shape into geometric models) on the basis of the median values of various curvatures, the maximum amount of tilt, and the minimum amount of tilt obtained for each evaluation target region 501 (S112). Next, the score adder 335 adds a score to each of the plurality of evaluation target regions 501, and outputs information indicating an evaluation target region 501 to which a highest score (or a score equal to or greater than a threshold) is added to the holdable region determination unit 336 (S113). The holdable region determination unit 336 sets the holdable region 601 within the evaluation target region 501 on the basis of the median values of various curvatures, the maximum amount of tilt, and the minimum amount of tilt in the evaluation target region 501 to which the highest score (or a score equal to or greater than the threshold) is added, and the extendable distance of the sucker 205. In addition, the holding posture determination unit 337 determines the holding posture of the holder 200 on the basis of the median values of various curvatures, the maximum amount of tilt, and the minimum amount of tilt in the evaluation target region 501 (S106).

According to the configuration described above, it is possible to achieve an improvement in the stability of object holding. That is, in the present embodiment, the controller 300 determines the holding posture of the holder 200 so as to line up the at least two suckers 205 included in the holder 200 in a direction in which the curvature of the surface of the object O is small. According to such a configuration, it is possible to stably hold the object O using the plurality of suckers 205 lined up in a direction in which the curvature is small. Thereby, it is possible to achieve an improvement in the stability of object holding.

In the present embodiment, the controller 300 determines a direction in which the at least two suckers 205 of the holder 200 are lined up on the basis of geometric models classified on the basis of one or more inflection point and one or more extreme value of the curvature of the surface of the object O. According to such a configuration, in a shape (for example, a cylindrical surface) in which the curvature of the surface of the object O does not change in a specific direction, it is possible to line up the at least two suckers 205 of the holder 200 in a direction in which the curvature does not change on the basis of the classified geometric models. Thereby, it is possible to achieve a further improvement in the stability of object holding.

In the present embodiment, in a case where a plurality of evaluation target regions 501 are present on the surface of the object O, the controller 300 causes the holder to preferentially hold an evaluation target region 501 with a curvature of zero or a positive value among the plurality of evaluation target regions 501. According to such a configuration, it is possible to bring the sucker 205 into contact with a flat surface or a curved surface that is protruded upward. Thereby, it is possible to achieve a further improvement in the stability of object holding.

(Modification example)

The present modification example is different from the above embodiment, in that an object O to be extracted preferentially is selected on the basis of the curvature of the surface of the object O among a plurality of objects O laid at the movement source S1. Meanwhile, components other than those described below are the same as those of the first embodiment.

In the present modification example, the evaluation region setting unit 333 sets the evaluation target region 501 in each of a plurality of objects O. The surface shape discriminator 334 statistically processes various curvatures, the amounts of tilt, and the like calculated by the curvature calculator 332, and obtains the median values of various curvatures and the amount of tilt for each evaluation target region 501 of the plurality of objects O. The holdable region determination unit 336 sets the holdable region 601 so that the holder to preferentially hold an object O having an evaluation target region 501 in which the median value of the curvature obtained for each evaluation target region 501 is zero or a positive value among the plurality of objects O. According to such a configuration, it is possible to bring the sucker 205 into contact with a flat surface or a curved surface that is prtruded upward. Thereby, it is possible to achieve a further improvement in the stability of object holding. Meanwhile, a score as described in the first embodiment may be added to the evaluation target region 501.

(Second embodiment)

Next, a second embodiment will be described. The second embodiment is different from the first embodiment, in that a pair of clampers 801 that clamp an object O are included instead of the plurality of suckers 205 that adsorb and hold the object O. Meanwhile, components other than those described below are the same as those of the first embodiment.

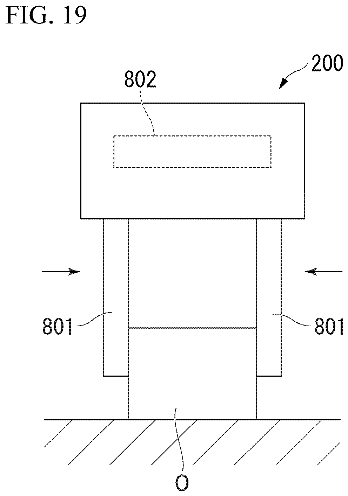

FIG. 19 is a front view illustrating a holder 200 of the second embodiment. In the present embodiment, the holder 200 includes the pair of clampers 801 and a driving mechanism 802 that drives the pair of clampers 801. The pair of clampers 801 hold an object O by clamping the object O. The clamper 801 is an example of an "attachment portion" that holds an object O in a state of being attached to the object O. The driving mechanism 802 includes an actuator such as a motor or a cylinder (not shown), and drives the pair of clampers 801 in a direction in which the clampers are separated from each other and a direction in which they come close to each other.

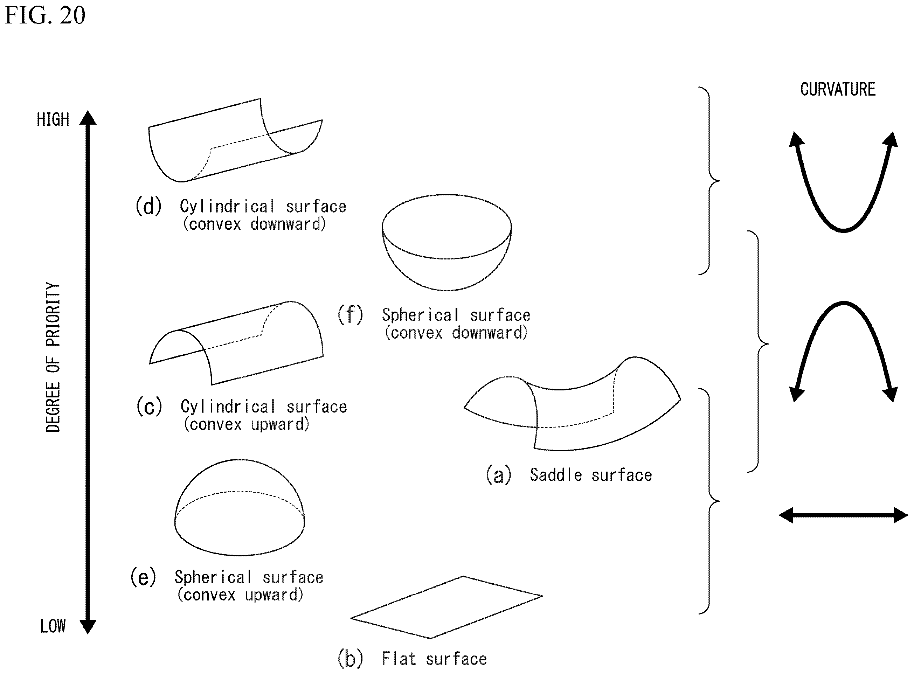

FIG. 20 is a diagram illustrating a degree of priority (high or low score) which is set in each geometric model in the second embodiment. In the present embodiment, in a case where the maximum curvature is negative, or the maximum curvature and the minimum curvature are negative, that is, a case where the shape of the surface of an object O is a valley surface or a bowl surface, a high score is added. That is, a high score is added by a geometric model that is protruded downward, and next, a high score is added to a geometric model that is protruded upward. On the other hand, a low score is added to a flat surface. Thereby, when an object O is clamped by the pair of clampers 801, it is possible to more reliably hold the object O.

In the present embodiment, in a case where the surface of an object O has a first curvature in a first direction and has a second curvature larger than the first curvature in a second direction different from the first direction, the holding posture determination unit 337 determines the holding posture of the holder 200 so as to line up the pair of clampers 801 included in the holder 200 in the second direction. In the present embodiment, the second direction is a direction (direction in which a maximum curvature is present) in which a curvature is largest on the surface of an object O.

According to such a configuration, similarly to the first embodiment, it is possible to improve the stability of object holding.

Hereinbefore, several embodiments have been described, but the embodiments are not limited to the above examples. For example, the modification example of the first embodiment may be carried out using a combination with the second embodiment. In addition, some or all of the functions of the controller 300 may be provided in, for example, a management device 13 which is a server device on a network. In the embodiment, various curvatures and the amounts of tilt are statistically process for each evaluation target region 501 and the median values of various curvatures and the amount of tilt are obtained has been described.

According to at least one embodiment described above, in a case where the surface of an object has a first curvature in a first direction and has a second curvature larger than the first curvature in a second direction different from the first direction, the controller of the handling device determines the holding posture of the holder so as to line up at least two attachment portions included in a plurality of attachment portions in a predetermined direction that is any one of the first direction and the second direction. Thereby, it is possible to improve the stability of object holding.

While preferred embodiments of the invention have been described and illustrated above, it should be understood that these are exemplary of the invention and are not to be considered as limiting.

Accordingly, the invention is not to be considered as being limited by the foregoing description, and is only limited by the scope of the appended claims.

## Claims

1. A transport system (1) comprising:

   a handling device (10) comprising a holder (200) including a plurality of attachment portions (205, 801) and being capable of holding an object (O), the plurality of attachment portions (205, 801) being a plurality of suckers (205) capable of adhering and holding the object (O) or being a pair of clampers (801) capable of clamping the object (O);
   a first detector (11) configured to acquire image data of the object (O);
   a second detector (12) configured to acquire distance image data of the object (O); and
   a controller (300) configured to calculate curvatures of a surface of the object (O) based on information detected by the first detector (11) and the second detector (12), the controller (300) including an image analyzer (320), a curvature calculator (332), an evaluation region setting unit (333), a surface shape discriminator (334), and a holding posture determination unit (337), the image analyzer (320) being configured to generate a depth image (402) on the basis of the image data and the distance image data, the curvature calculator (332) being configured to obtain quadric surfaces of local surfaces of the object (O) on the basis of the depth image (402) and calculate various curvatures and an amount of tilt of each of the local surfaces of the object (O), the various curvatures being mean curvature, Gaussian curvature, maximum curvature, and minimum curvature, the evaluation region setting unit (333) being configured to set one or more evaluation target regions (501) with respect to the surface of the object (O), the surface shape discriminator (334) being configured to statistically process the various curvatures, the maximum amounts of tilt, and the minimum amounts of tilt of the local surfaces of the object (O) calculated by the curvature calculator (332) throughout the entirety of the evaluation target regions (501), to thereby calculate median values of the various curvatures, the maximum amount of tilt, and the minimum amount of tilt for each evaluation target region (501), the holding posture determination unit (337) being configured to determine a holding posture of the holder (200) with respect to the object (O),
wherein
in a case where the holding posture determination unit (337) determines that the surface of the object (O) has a first curvature in a first direction and has a second curvature larger than the first curvature in a second direction different from the first direction based on the calculated curvatures of the surface of the object (O),
the holding posture determination unit (337) determines the holding posture of the holder (200) so as to line up at least two suckers (205) included in the plurality of suckers (205) in the first direction or determines the holding posture of the holder (200) so as to line up the pair of clampers (801) in the second direction,
the first curvature and the second curvature are median values of curvatures calculated by the surface shape discriminator (334),
the first direction is a direction in which a curvature is smallest on the surface of the object (O),
wherein the controller (300) is configured to, in a case where the controller (300) sets the evaluation target regions (501) on the surface of the object (O), classify a shape of each of the plurality of evaluation target regions (501) into any one of a plurality of geometric models based on the calculated curvatures, and configured to determine a region to be held by the holder (200) among the plurality of evaluation target regions (501) based on the classified geometric model of each of the plurality of evaluation target regions (501) and a degree of priority set in each geometric model.

2. The transport system (1) according to claim 1, wherein
the controller (300) determines the first direction in which the at least two suckers (205) are lined up on the basis of the geometric model that is classified on the basis of one or more inflection points and one or more extreme values of one or more curvatures of the surface of the object (O).

3. The transport system (1) according to claim 1, wherein
the controller (300) determines the first direction in which the at least two suckers (205) are lined up on the basis of a mean curvature and a Gaussian curvature of the surface of the object (O).

4. The transport system (1) according to any one of claim 1 to 3, wherein
the controller (300) classifies a shape of the surface of the object (O) on the basis of information indicating a positive or negative curvature of the object (O), and changes a method of causing the holder (200) to hold the object (O) on the basis of the classified shape.

5. The transport system (1) according to claim 4, wherein
the controller (300) classifies the shape of the surface of the object (O) as any one of a plurality of shapes including shapes of a flat surface, a cylindrical surface, a spherical surface, and a saddle surface on the basis of the information indicating a positive or negative curvature of the object (O).

6. The transport system (1) according to any one of claims 1 to 5, wherein
in a case where the plurality of evaluation target regions (501) are present on the surface of the object (O), the controller (300) causes the holder (200) including a plurality of suckers (205) to preferentially hold an evaluation target region (501) with a curvature of zero or a positive value among the plurality of evaluation target regions (501).

7. The transport system (1) according to any one of claims 1 to 6, wherein
in a case where a plurality of objects (O) are present, the controller (300) causes the holder (200) including a plurality of suckers (205) to preferentially hold an object (O) having an evaluation target region (501) with a curvature of zero or a positive value among the plurality of objects (O).

8. The transport system (1) according to any one of claims 1 to 7, wherein each of the plurality of suckers (205) has an extendable structure (205a), and
the controller (300) determines a holdable region (601) capable of being held by the holder (200) in the surface of the object (O) on the basis of an extendable distance of each of the plurality of suckers (205) and a curvature of the surface of the object (O).

9. The transport system (1) according to any one of claims 1 to 8, wherein
in a case where a discontinuous position at which a curvature changes discontinuously is present on the surface of the object (O), the controller (300) determines a holding position of the holder (200) so that the plurality of suckers (205) do not straddle the discontinuous position.

10. The transport system (1) according to claim 1, wherein
the controller (300) is configured to add, to each of the plurality of evaluation target regions (501), a score based on the classified geometric model of each of the plurality of evaluation target regions (501) and the degree of priority set in each geometric model, and configured to determine the region to be held by the holder (200) among the plurality of evaluation target regions (501) based on the score added to each of the plurality of evaluation target regions (501).

11. The transport system (1) according to claim 10, wherein
the controller (300) is configured to add, to each of the plurality of evaluation target regions (501), the score based on the calculated curvatures of the plurality of evaluation target regions (501) and the classified geometric model.

12. A method for controlling a transport system (1),

the transport system (1) comprising:

a handling device (10) including a holder (200) including a plurality of attachment portions (205, 801) and being capable of holding an object (O), the plurality of attachment portions (205, 801) being a plurality of suckers (205) capable of adhering and holding the object (O) or being a pair of clampers (801) capable of clamping the object (O);
a first detector (11) configured to acquire image data of the object (O);
a second detector (12) configured to acquire distance image data of the object (O); and
a controller (300) configured to calculate curvatures of a surface of the object (O) based on information detected by the first detector (11) and the second detector (12), the controller (300) including an image analyzer (320), a curvature calculator (332), an evaluation region setting unit (333), a surface shape discriminator (334), and a holding posture determination unit (337), the image analyzer (320) being configured to generate a depth image (402) on the basis of the image data and the distance image data, the curvature calculator (332) being configured to obtain quadric surfaces of local surfaces of the object (O) on the basis of the depth image (402) and calculate various curvatures and an amount of tilt of each of the local surfaces of the object (O), the various curvatures being mean curvature, Gaussian curvature, maximum curvature, and minimum curvature, the evaluation region setting unit (333) being configured to set one or more evaluation target regions (501) with respect to the surface of the object (O), the surface shape discriminator (334) being configured to statistically process the various curvatures, the maximum amounts of tilt, and the minimum amounts of tilt of the local surfaces of the object (O) calculated by the curvature calculator (332) throughout the entirety of the evaluation target regions (501), to thereby calculate median values of the various curvatures, the maximum amount of tilt, and the minimum amount of tilt for each evaluation target region (501), the holding posture determination unit (337) being configured to determine a holding posture of the holder (200) with respect to the object (O),

the method comprising:

calculating curvatures of a surface of the object (O) based on information detected by the first detector (11) and the second detector (12);
in a case where the holding posture determination unit (337) determines that the surface of the object (O) has a first curvature in a first direction and has a second curvature larger than the first curvature in a second direction different from the first direction based on the calculated curvatures of the surface of the object (O), determining a holding posture of the holder (200) so as to line up at least two suckers (205) included in the plurality of suckers (205) in the first direction or determining the holding posture of the holder (200) so as to line up the pair of clampers (801) in the second direction, the first curvature and the second curvature are median values of curvatures calculated by the surface shape discriminator (334), the first direction is a direction in which a curvature is smallest on the surface of the object (O); and
classifying, in a case where the controller (300) sets a plurality of evaluation target regions (501) on the surface of the object (O), a shape of each of the plurality of evaluation target regions (501) into any one of a plurality of geometric models based on the calculated curvatures, and determining a region to be held by the holder (200) among the plurality of evaluation target regions (501) based on the classified geometric model of each of the plurality of evaluation target regions (501) and a degree of priority set in each geometric model.

**13.** A program for realizing a controller (300) of a transport system (1),

the transport system (1) comprising:

a handling device (10) including a holder (200) including a plurality of attachment portions (205, 801) and being capable of holding an object (O), the plurality of attachment portions (205, 801) being a plurality of suckers (205) capable of adhering and holding the object (O) or being a pair of clampers (801) capable of clamping the object (O);
a first detector (11) configured to acquire image data of the object (O);
a second detector (12) configured to acquire distance image data of the object (O); and
a controller (300) configured to calculate curvatures of a surface of the object (O) based on information detected by the first detector (11) and the second detector (12), the controller (300) including an image analyzer (320), a curvature calculator (332), an evaluation region setting unit (333), a surface shape discriminator (334), and a holding posture determination unit (337), the image analyzer (320) being configured to generate a depth image (402) on the basis of the image data and the distance image data, the curvature calculator (332) being configured to obtain quadric surfaces of local surfaces of the object (O) on the basis of the depth image (402) and calculate various curvatures and an amount of tilt of each of the local surfaces of the object (O), the various curvatures being mean curvature, Gaussian curvature, maximum curvature, and minimum curvature, the evaluation region setting unit (333) being configured to set one or more evaluation target regions (501) with respect to the surface of the object (O), the surface shape discriminator (334) being configured to statistically process the various curvatures, the maximum amounts of tilt, and the minimum amounts of tilt of the local surfaces of the object (O) calculated by the curvature calculator (332) throughout the entirety of the evaluation target regions (501), to thereby calculate median values of the various curvatures, the maximum amount of tilt, and the minimum amount of tilt for each evaluation target region (501), the holding posture determination unit (337) being configured to determine a holding posture of the holder (200) with respect to the object (O),

the program causing a computer
to calculate curvatures of a surface of the object (O) based on information detected by the first detector (11) and the second detector (12);
in a case where the holding posture determination unit (337) determined that the surface of the object (O) has a first curvature in a first direction and has a second curvature larger than the first curvature in a second direction different from the first direction based on the calculated curvatures of the surface of the object (O),
to determine a holding posture of a holder (200) so as to line up at least two suckers (205) included in the plurality of suckers (205) in the first direction or to determine the holding posture of the holder (200) so as to line up the pair of clampers (801) in the second direction, the first curvature and the second curvature are median values of curvatures calculated by the surface shape discriminator (334), the first direction is a direction in which a curvature is smallest on the surface of the object (O); and
to classify, in a case where the controller (300) sets a plurality of evaluation target regions (501) on the surface of the object (O), a shape of each of the plurality of evaluation target regions (501) into any one of a plurality of geometric models based on the calculated curvatures, and determining a region to be held by the holder (200) among the plurality of evaluation target regions (501) based on the classified geometric model of each of the plurality of evaluation target regions (501) and a degree of priority set in each geometric model.

**Patentansprüche**

**1.** Ein Transportsystem (1) umfassend:

eine Handhabungsvorrichtung (10), die einen Halter (200) umfasst, der eine Vielzahl von Befestigungsabschnitten (205, 801) enthält und in der Lage ist, ein Objekt (O) zu halten, wobei die Vielzahl von Befestigungsabschnitten (205, 801) eine Vielzahl von Saugnäpfen (205) sind, die in der Lage sind, das Objekt (O) anzuheften und zu halten, oder ein Paar von Klemmen (801) sind, die in der Lage sind, das Objekt (O) einzuklemmen;
einen ersten Detektor (11), der konfiguriert ist zum Erfassen von Bilddaten des Objekts (O);

**EP 3 617 936 B1**

einen zweiten Detektor (12), der konfiguriert ist zum Erfassen von Entfernungsbilddaten des Objekts (O); und eine Steuerung (300), die konfiguriert ist zum Berechnen von Krümmungen einer Oberfläche des Objekts (O) auf Grundlage von Information, die durch den ersten Detektor (11) und den zweiten Detektor (12) detektiert wird, wobei die Steuerung (300) einen Bildanalysator (320), eine Krümmungsberechner (332), eine Auswertungsbereichs-Einstelleinheit (333), einen Oberflächenform-Diskriminator (334) und eine Haltestellung-Bestimmungseinheit (337) enthält, der Bildanalysator (320) konfiguriert ist zum Erzeugen eines Tiefenbildes (402) auf Grundlage der Bilddaten und der Entfernungsbilddaten, wobei der Krümmungsberechner (332) konfiguriert ist zum Beschaffen quadratischer Oberflächen lokaler Oberflächen des Objekts (O) auf Grundlage des Tiefenbildes (402) und zum Berechnen verschiedener Krümmungen und einer Neigungsgröße jeder der lokalen Oberflächen des Objekts (O), wobei die verschiedenen Krümmungen mittlere Krümmung, Gaußsche Krümmung sind, maximale Krümmung und minimale Krümmung sind, wobei die Auswertungsbereich-Einstelleinheit (333) konfiguriert ist zum Einstellen eines oder mehrerer Auswertungszielbereiche (501) in Bezug auf die Oberfläche des Objekts (O), wobei der Oberflächenform-Diskriminator (334) konfiguriert ist zum statistischen Verarbeiten der verschiedenen Krümmungen, der maximalen Neigungsgrößen, und die minimalen Neigungsgrößen der lokalen Oberflächen des Objekts (O), die durch den Krümmungsberechner (332) über die Gesamtheit der Auswertungszielbereiche (501) berechnet wurden, um dadurch Medianwerte der verschiedenen Krümmungen, die maximale Neigungsgröße und die minimale Neigungsgröße für jeden Auswertungszielbereich (501) zu berechnen, wobei die Haltestellung-Bestimmungseinheit (337) konfiguriert ist zum Bestimmen einer Haltestellung des Halters (200) in Bezug auf das Objekt (O),

wobei

in einem Fall, in dem die Haltestellung-Bestimmungseinheit (337) bestimmt, dass die Oberfläche des Objekts (O) eine erste Krümmung in einer ersten Richtung und eine zweite Krümmung, die größer als die erste Krümmung ist, in einer zweiten Richtung, die sich von der ersten Richtung unterscheidet, auf Grundlage der berechneten Krümmungen der Oberfläche des Objekts (O) aufweist,

die Haltestellung-Bestimmungseinheit (337) die Haltestellung des Halters (200) bestimmt, um mindestens zwei Saugnäpfe (205), die in der Vielzahl von Saugnäpfen (205) enthalten sind, in der ersten Richtung auszurichten, oder die Haltestellung des Halters (200) bestimmt, um das Paar von Klemmen (801) in der zweiten Richtung auszurichten,

die erste Krümmung und die zweite Krümmung Medianwerte von Krümmungen sind, die von dem Oberflächenform-Diskriminator (334) berechnet werden,

die erste Richtung eine Richtung ist, in der eine Krümmung auf der Oberfläche des Objekts (O) am kleinsten ist, wobei die Steuerung (300) konfiguriert ist, in einem Fall, in dem die Steuerung (300) die Auswertungszielbereiche (501) auf der Oberfläche des Objekts (O) einstellt, zum Klassifizieren einer Form jedes der Vielzahl von Auswertungszielbereichen (501) in irgendeines von einer Vielzahl von geometrischen Modellen auf Grundlage der berechneten Krümmungen, und konfiguriert zum Bestimmen eines von dem Halter (200) zu haltenden Bereichs unter der Vielzahl von Auswertungszielbereichen (501) auf Grundlage des klassifizierten geometrischen Modells jedes der Vielzahl von Auswertungszielbereichen (501) und eines in jedem geometrischen Modell eingestellten Grads der Priorität.

2. Transportsystem (1) gemäß Anspruch 1, wobei
die Steuerung (300) die erste Richtung, in der die mindestens zwei Saugnäpfe (205) aufgereiht sind, auf Grundlage des geometrischen Modells bestimmt, das klassifiziert ist auf Grundlage eines oder mehrerer Wendepunkte und eines oder mehrerer Extremwerte von einer oder mehrerer Krümmungen der Oberfläche des Objekts (O).

3. Transportsystem (1) gemäß Anspruch 1, wobei
die Steuerung (300) auf Grundlage einer mittleren Krümmung und einer Gaußschen Krümmung der Oberfläche des Objekts (O) die erste Richtung bestimmt, in der die mindestens zwei Saugnäpfe (205) aufgereiht sind.

4. Transportsystem (1) gemäß einem der Ansprüche 1 bis 3, wobei
die Steuerung (300) eine Form der Oberfläche des Objekts (O) auf Grundlage von Information, die eine positive oder negative Krümmung des Objekts (O) angibt, klassifiziert und ein Verfahren ändert, um den Halter (200) zu veranlassen, das Objekt (O) auf Grundlage der klassifizierten Form zu halten.

5. Transportsystem (1) gemäß Anspruch 4, wobei
die Steuerung (300) die Form der Oberfläche des Objekts (O) auf Grundlage der Information, die eine positive oder negative Krümmung des Objekts (O) angibt, als eine beliebige Form aus einer Vielzahl von Formen einschließlich Formen einer flachen Oberfläche, einer zylindrischen Oberfläche, einer sphärischen Oberfläche und einer Satteloberfläche klassifiziert.

17

**6.** Transportsystem (1) gemäß einem der Ansprüche 1 bis 5, wobei
in einem Fall, in dem die Vielzahl von Auswertungszielbereichen (501) auf der Oberfläche des Objekts (O) vorhanden ist, die Steuerung (300) bewirkt, dass der Halter (200), der eine Vielzahl von Saugnäpfen (205) enthält, vorzugsweise einen Auswertungszielbereich (501) mit einer Krümmung von Null oder einem positiven Wert unter der Vielzahl von Auswertungszielbereichen (501) hält.

**7.** Transportsystem (1) gemäß einem der Ansprüche 1 bis 6, wobei
in einem Fall, in dem eine Vielzahl von Objekten (O) vorhanden ist, die Steuerung (300) bewirkt, dass der Halter (200), der eine Vielzahl von Saugnäpfen (205) enthält, vorzugsweise ein Objekt (O) hält, das einen Auswertungszielbereich (501) mit einer Krümmung von Null oder einem positiven Wert unter der Vielzahl von Objekten (O) aufweist.

**8.** Transportsystem (1) gemäß einem der Ansprüche 1 bis 7, wobei jeder der Vielzahl von Saugnäpfen (205) eine ausfahrbare Struktur (205a) aufweist, und
die Steuerung (300) auf Grundlage einer Bestimmungsentfernung jedes der Vielzahl von Saugnäpfen (205) und einer Krümmung der Oberfläche des Objekts (O) einen Haltebereich (601) bestimmt, der von dem Halter (200) in der Oberfläche des Objekts (O) gehalten werden kann.

**9.** Transportsystem (1) gemäß einem der Ansprüche 1 bis 8, wobei
in einem Fall, in dem eine diskontinuierliche Position, an der sich eine Krümmung diskontinuierlich ändert, auf der Oberfläche des Objekts (O) vorhanden ist, die Steuerung (300) eine Halteposition des Halters (200) bestimmt, so dass die Vielzahl von Saugnäpfen (205) die diskontinuierliche Position nicht überspannt.

**10.** Transportsystem (1) gemäß Anspruch 1, wobei
die Steuerung (300) konfiguriert ist zum Hinzufügen einer Wertung zu jedem der Vielzahl von Auswertungszielbereichen (501) auf Grundlage des klassifizierten geometrischen Modells jedes der Vielzahl von Auswertungsziel-reichen (501) und des in jedem geometrischen Modell eingestellten Grades der Priorität, und konfiguriert ist zum Bestimmen des von dem Halter (200) zu haltenden Bereichs aus der Vielzahl von Auswertungszielbereichen (501) auf Grundlage der zu jedem der Vielzahl von Auswertungszielbereichen (501) hinzugefügten Wertung.

**11.** Transportsystem (1) gemäß Anspruch 10, wobei
die Steuerung (300) konfiguriert ist zum Hinzufügen der Wertung zu jedem der Vielzahl von Auswertungszielbereichen (501) auf Grundlage der berechneten Krümmungen der Vielzahl von Auswertungszielbereichen (501) und des klassifizierten geometrischen Modells.

**12.** Verfahren zum Steuern eines Transportsystems (1),

das Transportsystem (1) umfassend:

eine Handhabungsvorrichtung (10), die einen Halter (200) enthält, der eine Vielzahl von Befestigungsabschnitten (205, 801) enthält und in der Lage ist, ein Objekt (O) zu halten, wobei die Vielzahl von Befestigungsabschnitten (205, 801) eine Vielzahl von Saugnäpfen (205) sind, die in der Lage sind, das Objekt (O) anzuheften und zu halten, oder ein Paar von Klemmen (801) sind, die in der Lage sind, das Objekt (O) einzuklemmen;
einen ersten Detektor (11), der konfiguriert ist zum Erfassen von Bilddaten des Objekts (O);
einen zweiten Detektor (12), der konfiguriert ist zum Erfassen von Entfernungsbilddaten des Objekts (O); und
eine Steuerung (300), die konfiguriert ist zum Berechnen von Krümmungen einer Oberfläche des Objekts (O) auf Grundlage von Information, die durch den ersten Detektor (11) und den zweiten Detektor (12) detektiert wird, wobei die Steuerung (300) einen Bildanalysator (320), eine Krümmungsberechner (332), eine Auswertungsbereichs-Einstelleinheit (333), einen Oberflächenform-Diskriminator (334) und eine Haltestellung-Bestimmungseinheit (337) enthält, der Bildanalysator (320) konfiguriert ist zum Erzeugen eines Tiefenbildes (402) auf Grundlage der Bilddaten und der Entfernungsbilddaten, wobei der Krümmungsberechner (332) konfiguriert ist zum Beschaffen quadratischer Oberflächen lokaler Oberflächen des Objekts (O) auf Grundlage des Tiefenbildes (402) und zum Berechnen verschiedener Krümmungen und einer Neigungsgröße jeder der lokalen Oberflächen des Objekts (O), wobei die verschiedenen Krümmungen mittlere Krümmung, Gaußsche Krümmung sind, maximale Krümmung und minimale Krümmung sind, wobei die Auswertungsbereich-Einstelleinheit (333) konfiguriert ist zum Einstellen eines oder mehrerer Auswertungszielbereiche (501) in Bezug auf die Oberfläche des Objekts (O), wobei der Oberflächenform-Diskriminator (334) konfiguriert ist zum statistischen Verarbeiten der verschiedenen Krümmungen, der maximalen Neigungsgrößen, und die minimalen Neigungsgrößen der lokalen Oberflächen des Objekts (O), die durch den Krümmungsberechner (332) über die Gesamtheit der Auswertungszielbereiche (501) berechnet wurden, um dadurch Medianwerte der verschiedenen Krümmungen, die maximale Neigungsgröße und die minimale Neigungsgröße für jeden Auswertungszielbereich (501) zu berechnen, wobei die Haltestellung-Bestimmungseinheit (337) konfiguriert ist zum Bestimmen einer Haltestellung des Halters (200) in Bezug auf das Objekt (O),

das Verfahren umfasst:

Berechnen von Krümmungen einer Oberfläche des Objekts (O) auf Grundlage von Information, die von dem ersten Detektor (11) und dem zweiten Detektor (12) detektiert wird;
in einem Fall, in dem die Haltestellung-Bestimmungseinheit (337) bestimmt, dass die Oberfläche des Objekts (O) eine erste Krümmung in einer ersten Richtung und eine zweite Krümmung, die größer als die erste Krümmung ist, in einer zweiten Richtung, die sich von der ersten Richtung unterscheidet, auf Grundlage der berechneten Krümmungen der Oberfläche des Objekts (O) aufweist, Bestimmen einer Haltestellung des Halters (200), um mindestens zwei Saugnäpfe (205), die in der Vielzahl von Saugnäpfen (205) enthalten sind, in der ersten Richtung auszurichten, oder die Haltestellung des Halters (200) bestimmt, um das Paar von Klemmen (801) in der zweiten Richtung auszurichten, die erste Krümmung und die zweite Krümmung Medianwerte von Krümmungen sind, die von dem Oberflächenform-Diskriminator (334) berechnet werden, die erste Richtung eine Richtung ist, in der eine Krümmung auf der Oberfläche des Objekts (O) am kleinsten ist; und
Klassifizieren, in einem Fall, in dem die Steuerung (300) eine Vielzahl von Auswertungszielbereichen (501) auf der Oberfläche des Objekts (O) einstellt, einer Form jedes der Vielzahl von Auswertungszielbereichen (501) in irgendeines von einer Vielzahl von geometrischen Modellen auf Grundlage der berechneten Krümmungen, und Bestimmen eines von dem Halter (200) zu haltenden Bereichs unter der Vielzahl von Auswertungszielbereichen (501) auf Grundlage des klassifizierten geometrischen Modells jedes der Vielzahl von Auswertungszielbereichen (501) und eines in jedem geometrischen Modell eingestellten Grads der Priorität.

**13.** Ein Programm zur Realisierung einer Steuerung (300) eines Transportsystems (1),

das Transportsystem (1) umfassend:

eine Handhabungsvorrichtung (10), die einen Halter (200) enthält, der eine Vielzahl von Befestigungsabschnitten (205, 801) enthält und in der Lage ist, ein Objekt (O) zu halten, wobei die Vielzahl von Befestigungsabschnitten (205, 801) eine Vielzahl von Saugnäpfen (205) sind, die in der Lage sind, das Objekt (O) anzuheften und zu halten, oder ein Paar von Klemmen (801) sind, die in der Lage sind, das Objekt (O) einzuklemmen;
einen ersten Detektor (11), der konfiguriert ist zum Erfassen von Bilddaten des Objekts (O);
einen zweiten Detektor (12), der konfiguriert ist zum Erfassen von Entfernungsbilddaten des Objekts (O); und eine Steuerung (300), die konfiguriert ist zum Berechnen von Krümmungen einer Oberfläche des Objekts (O) auf Grundlage von Information, die durch den ersten Detektor (11) und den zweiten Detektor (12) detektiert wird, wobei die Steuerung (300) einen Bildanalysator (320), eine Krümmungsberechner (332), eine Auswertungsbereichs-Einstelleinheit (333), einen Oberflächenform-Diskriminator (334) und eine Haltestellung-Bestimmungseinheit (337) enthält, der Bildanalysator (320) konfiguriert ist zum Erzeugen eines Tiefenbildes (402) auf Grundlage der Bilddaten und der Entfernungsbilddaten, wobei der Krümmungsberechner (332) konfiguriert ist zum Beschaffen quadratischer Oberflächen lokaler Oberflächen des Objekts (O) auf Grundlage des Tiefenbildes (402) und zum Berechnen verschiedener Krümmungen und einer Neigungsgröße jeder der lokalen Oberflächen des Objekts (O), wobei die verschiedenen Krümmungen mittlere Krümmung, Gaußsche Krümmung sind, maximale Krümmung und minimale Krümmung sind, wobei die Auswertungsbereich-Einstelleinheit (333) konfiguriert ist zum Einstellen eines oder mehrerer Auswertungszielbereiche (501) in Bezug auf die Oberfläche des Objekts (O), wobei der Oberflächenform-Diskriminator (334) konfiguriert ist zum statistischen Verarbeiten der verschiedenen Krümmungen, der maximalen Neigungsgrößen, und die minimalen Neigungsgrößen der lokalen Oberflächen des Objekts (O), die durch den Krümmungsberechner (332) über die Gesamtheit der Auswertungszielbereiche (501) berechnet wurden, um dadurch Medianwerte der verschiedenen Krümmungen, die maximale Neigungsgröße und die minimale Neigungsgröße für jeden Auswertungszielbereich (501) zu berechnen, wobei die Haltestellung-Bestimmungseinheit (337) konfiguriert ist zum Bestimmen einer Haltestellung des Halters (200) in Bezug auf das Objekt (O),

das Programm einen Computer veranlasst zum
Berechnen von Krümmungen einer Oberfläche des Objekts (O) auf Grundlage von Information, die von dem ersten Detektor (11) und dem zweiten Detektor (12) detektiert wird;
in einem Fall, in dem die Haltestellung-Bestimmungseinheit (337) bestimmt, dass die Oberfläche des Objekts (O) eine erste Krümmung in einer ersten Richtung und eine zweite Krümmung, die größer als die erste Krümmung ist, in einer zweiten Richtung, die sich von der ersten Richtung unterscheidet, auf Grundlage der berechneten Krümmungen der Oberfläche des Objekts (O) aufweist,
Bestimmen einer Haltestellung eines Halters (200), um mindestens zwei Saugnäpfe (205), die in der Vielzahl von Saugnäpfen (205) enthalten sind, in der ersten Richtung auszurichten, oder die Haltestellung des Halters (200) bestimmt, um das Paar von Klemmen (801) in der zweiten Richtung auszurichten, die erste Krümmung und die zweite Krümmung Medianwerte von Krümmungen sind, die von dem Oberflächenform-Diskriminator (334) berechnet werden, die erste Richtung eine Richtung ist, in der eine Krümmung auf der Oberfläche des Objekts (O) am kleinsten ist; und
Klassifizieren, in einem Fall, in dem die Steuerung (300) eine Vielzahl von Auswertungszielbereichen (501) auf der Oberfläche des Objekts (O) einstellt, einer Form jedes der Vielzahl von Auswertungszielbereichen (501) in irgendeines von einer Vielzahl von geometrischen Modellen auf Grundlage der berechneten Krümmungen, und
Bestimmen eines von dem Halter (200) zu haltenden Bereichs unter der Vielzahl von Auswertungszielbereichen (501) auf Grundlage des klassifizierten geometrischen Modells jedes der Vielzahl von Auswertungszielbereichen (501) und eines in jedem geometrischen Modell eingestellten Grads der Priorität.

**Revendications**

1. Système (1) de transport comprenant :

   un dispositif de manipulation (10) comprenant un dispositif de saisie (200) incluant une pluralité de parties de fixation (205, 801) et étant apte à saisir un objet (O), la pluralité de parties de fixation (205, 801) étant une pluralité de ventouses (205) aptes à faire adhérer et à saisir l'objet (O) ou étant une paire de pinces (801) aptes à serrer l'objet (O) ;
   un premier détecteur (11) configuré pour acquérir des données d'image de l'objet (O) ;
   un second détecteur (12) configuré pour acquérir des données d'image de distance de l'objet (O) ; et
   un dispositif de commande (300) configuré pour calculer des courbures d'une surface de l'objet (O) sur la base d'informations détectées par le premier détecteur (11) et le second détecteur (12), le dispositif de commande (300) incluant un analyseur (320) d'image, un calculateur (332) de courbure, une unité de définition de région d'évaluation (333), un discriminateur (334) de forme de surface et une unité de détermination de posture de saisie (337), l'analyseur (320) d'image étant configuré pour générer une image de profondeur (402) sur la base des données d'image et des données d'image de distance, le calculateur (332) de courbure étant configuré pour obtenir des surfaces quadriques de surfaces locales de l'objet (O) sur la base de l'image de profondeur (402) et calculer diverses courbures et une quantité d'inclinaison de chacune des surfaces locales de l'objet (O), les diverses courbures étant une courbure moyenne, une courbure gaussienne, une courbure maximale et une courbure minimale, l'unité de définition de région d'évaluation (333) étant configurée pour définir une ou plusieurs régions cibles d'évaluation (501) par rapport à la surface de l'objet (O), le discriminateur (334) de forme de surface étant configuré pour traiter statistiquement les diverses courbures, les quantités maximales d'inclinaison, et les quantités minimales d'inclinaison des surfaces locales de l'objet (O) calculées par le calculateur (332) de courbure dans la totalité des régions cibles d'évaluation (501), pour calculer ainsi des valeurs médianes des diverses courbures, la quantité maximale d'inclinaison et la quantité minimale d'inclinaison pour chaque région cible d'évaluation (501),
   l'unité de détermination de posture de saisie (337) étant configurée pour déterminer une posture de saisie du dispositif de saisie (200) par rapport à l'objet (O),
   dans lequel
   dans un cas où l'unité de détermination de posture de saisie (337) détermine que la surface de l'objet (O) présente une première courbure dans une première direction et présente une seconde courbure plus grande que la première courbure dans une seconde direction différente de la première direction sur la base des courbures calculées de la surface de l'objet (O),
   l'unité de détermination de posture de saisie (337) détermine la posture de saisie du dispositif de saisie (200)

de façon à aligner au moins deux ventouses (205) incluses dans la pluralité de ventouses (205) dans la première direction ou détermine la posture de saisie du dispositif de saisie (200) de façon à aligner la paire de pinces (801) dans la seconde direction,

la première courbure et la seconde courbure sont des valeurs médianes de courbures calculées par le discriminateur (334) de forme de surface,

la première direction est une direction dans laquelle une courbure est la plus petite sur la surface de l'objet (O), dans lequel le dispositif de commande (300) est configuré pour, dans un cas où le dispositif de commande (300) définit les régions cibles d'évaluation (501) sur la surface de l'objet (O), classer une forme de chacune de la pluralité de régions cibles d'évaluation (501) dans l'un quelconque d'une pluralité de modèles géométriques sur la base des courbures calculées, et configuré pour déterminer une région devant être saisie par le dispositif de saisie (200) parmi la pluralité de régions cibles d'évaluation (501) sur la base du modèle géométrique classé de chacune de la pluralité de régions cibles d'évaluation (501) et d'un degré de priorité défini dans chaque modèle géométrique.

2. Système (1) de transport selon la revendication 1, dans lequel
le dispositif de commande (300) détermine la première direction dans laquelle les au moins deux ventouses (205) sont alignées sur la base du modèle géométrique qui est classé sur la base d'un ou plusieurs points d'inflexion et d'une ou plusieurs valeurs extrêmes d'une ou de plusieurs courbures de la surface de l'objet (O).

3. Système (1) de transport selon la revendication 1, dans lequel
le dispositif de commande (300) détermine la première direction dans laquelle les au moins deux ventouses (205) sont alignées sur la base d'une courbure moyenne et d'une courbure gaussienne de la surface de l'objet (O).

4. Système (1) de transport selon l'une quelconque des revendications 1 à 3, dans lequel
le dispositif de commande (300) classe une forme de la surface de l'objet (O) sur la base d'informations indiquant une courbure positive ou négative de l'objet (O), et modifie un procédé pour amener le dispositif de saisie (200) à saisir l'objet (O) sur la base de la forme classée.

5. Système (1) de transport selon la revendication 4, dans lequel
le dispositif de commande (300) classe la forme de la surface de l'objet (O) en tant que l'une quelconque d'une pluralité de formes incluant des formes d'une surface plate, d'une surface cylindrique, d'une surface sphérique et d'une surface en forme de selle sur la base des informations indiquant une courbure positive ou négative de l'objet (O).

6. Système (1) de transport selon l'une quelconque des revendications 1 à 5, dans lequel
dans un cas où la pluralité de régions cibles d'évaluation (501) sont présentes sur la surface de l'objet (O), le dispositif de commande (300) amène le dispositif de saisie (200) incluant une pluralité de ventouses (205) à saisir de préférence une région cible d'évaluation (501) avec une courbure nulle ou d'une valeur positive parmi la pluralité de régions cibles d'évaluation (501).

7. Système (1) de transport selon l'une quelconque des revendications 1 à 6, dans lequel
dans un cas où une pluralité d'objets (O) sont présents, le dispositif de commande (300) amène le dispositif de saisie (200) incluant une pluralité de ventouses (205) à saisir de préférence un objet (O) présentant une région cible d'évaluation (501) avec une courbure nulle ou d'une valeur positive parmi la pluralité d'objets (O).

8. Système (1) de transport selon l'une quelconque des revendications 1 à 7, dans lequel chacune de la pluralité de ventouses (205) présente une structure extensible (205a), et
le dispositif de commande (300) détermine une région pouvant être saisie (601) apte à être saisie par le dispositif de saisie (200) dans la surface de l'objet (O) sur la base d'une distance extensible de chacune de la pluralité de ventouses (205) et d'une courbure de la surface de l'objet (O).

9. Système (1) de transport selon l'une quelconque des revendications 1 à 8, dans lequel
dans un cas où une position discontinue à laquelle une courbure varie de manière discontinue est présente sur la surface de l'objet (O), le dispositif de commande (300) détermine une position de saisie du dispositif de saisie (200) de telle sorte que la pluralité de ventouses (205) ne chevauche pas la position discontinue.

10. Système (1) de transport selon la revendication 1, dans lequel
le dispositif de commande (300) est configuré pour ajouter, à chacune de la pluralité de régions cibles d'évaluation (501), un score sur la base du modèle géométrique classé de chacune de la pluralité de régions cibles d'évaluation (501) et du degré de priorité défini dans chaque modèle géométrique, et configuré pour déterminer la région à saisir par le dispositif de saisie (200) parmi la pluralité de régions cibles d'évaluation (501) sur la base du score ajouté à chacune de la pluralité de régions cibles d'évaluation (501).

11. Système (1) de transport selon la revendication 10, dans lequel
le dispositif de commande (300) est configuré pour ajouter, à chacune de la pluralité de régions cibles d'évaluation (501), le score sur la base des courbures calculées de la pluralité de régions cibles d'évaluation (501) et du modèle géométrique classé.

12. Procédé de commande d'un système (1) de transport,

le système (1) de transport comprenant :
un dispositif de manipulation (10) incluant un dispositif de saisie (200) incluant une pluralité de parties de fixation (205, 801) et étant apte à saisir un objet (O), la pluralité de parties de fixation (205, 801) étant une pluralité de ventouses (205) aptes à faire adhérer et à saisir l'objet (O) ou étant une paire de pinces (801) aptes à serrer l'objet (O) ;

un premier détecteur (11) configuré pour acquérir des données d'image de l'objet (O) ;
un second détecteur (12) configuré pour acquérir des données d'image de distance de l'objet (O) ; et
un dispositif de commande (300) configuré pour calculer des courbures d'une surface de l'objet (O) sur la base d'informations détectées par le premier détecteur (11) et le second détecteur (12), le dispositif de commande (300) incluant un analyseur (320) d'image, un calculateur (332) de courbure, une unité de définition de région d'évaluation (333), un discriminateur (334) de forme de surface et une unité de détermination de posture de saisie (337), l'analyseur (320) d'image étant configuré pour générer une image de profondeur (402) sur la base des données d'image et des données d'image de distance, le calculateur (332) de courbure étant configuré pour obtenir des surfaces quadriques de surfaces locales de l'objet (O) sur la base de l'image de profondeur (402) et calculer diverses courbures et une quantité d'inclinaison de chacune des surfaces locales de l'objet (O), les diverses courbures étant une courbure moyenne, une courbure gaussienne, une courbure maximale et une courbure minimale, l'unité de définition de région d'évaluation (333) étant configurée pour définir une ou plusieurs régions cibles d'évaluation (501) par rapport à la surface de l'objet (O), le discriminateur (334) de forme de surface étant configuré pour traiter statistiquement les diverses courbures, les quantités maximales d'inclinaison, et les quantités minimales d'inclinaison des surfaces locales de l'objet (O) calculées par le calculateur (332) de courbure dans la totalité des régions cibles d'évaluation (501), pour calculer ainsi des valeurs médianes des diverses courbures, la quantité maximale d'inclinaison et la quantité minimale d'inclinaison pour chaque région cible d'évaluation (501),

l'unité de détermination de posture de saisie (337) étant configurée pour déterminer une posture de saisie du dispositif de saisie (200) par rapport à l'objet (O),
le procédé comprenant :

le calcul de courbures d'une surface de l'objet (O) sur la base d'informations détectées par le premier détecteur (11) et le second détecteur (12) ;
dans un cas où l'unité de détermination de posture de saisie (337) détermine que la surface de l'objet (O) présente une première courbure dans une première direction et présente une seconde courbure plus grande que la première courbure dans une seconde direction différente de la première direction sur la base des courbures calculées de la surface de l'objet (O), la détermination d'une posture de saisie du dispositif de saisie (200)
de façon à aligner au moins deux ventouses (205) incluses dans la pluralité de ventouses (205) dans la première direction ou la détermination de la posture de saisie du dispositif de saisie (200) de façon à aligner la paire de pinces (801) dans la seconde direction, la première courbure et la seconde courbure étant des valeurs médianes de courbures calculées par le discriminateur (334) de forme de surface,
la première direction étant une direction dans laquelle une courbure est la plus petite sur la surface de l'objet (O) ; et
le classement, dans un cas où le dispositif de commande (300) définit une pluralité de régions cibles d'évaluation (501) sur la surface de l'objet (O), d'une forme de chacune de la pluralité de régions cibles d'évaluation (501) dans l'un quelconque d'une pluralité de modèles géométriques sur la base des courbures calculées, et la détermination d'une région devant être saisie par le dispositif de saisie (200) parmi la pluralité de régions cibles d'évaluation (501) sur la base du modèle géométrique classé de chacune de la pluralité de régions cibles d'évaluation (501) et d'un degré de priorité défini dans chaque modèle géométrique.

13. Programme pour réaliser un dispositif de commande (300) d'un système (1) de transport,

le système (1) de transport comprenant :

un dispositif de manipulation (10) incluant un dispositif de saisie (200) incluant une pluralité de parties de fixation (205, 801) et étant apte à saisir un objet (O), la pluralité de parties de fixation (205, 801) étant une pluralité de ventouses (205) aptes à faire adhérer et à saisir l'objet (O) ou étant une paire de pinces (801) aptes à serrer l'objet (O) ;
un premier détecteur (11) configuré pour acquérir des données d'image de l'objet (O) ;
un second détecteur (12) configuré pour acquérir des données d'image de distance de l'objet (O) ; et
un dispositif de commande (300) configuré pour calculer des courbures d'une surface de l'objet (O) sur la base d'informations détectées par le premier détecteur (11) et le second détecteur (12), le dispositif de commande (300) incluant un analyseur (320) d'image, un calculateur (332) de courbure, une unité de définition de région d'évaluation (333), un discriminateur (334) de forme de surface et une unité de détermination de posture de saisie (337), l'analyseur (320) d'image étant configuré pour générer une image de profondeur (402) sur la base des données d'image et des données d'image de distance, le calculateur (332) de courbure étant configuré pour obtenir des surfaces quadriques de surfaces locales de l'objet (O) sur la base de l'image de profondeur (402) et calculer diverses courbures et une quantité d'inclinaison de chacune des surfaces locales de l'objet (O), les diverses courbures étant une courbure moyenne, une courbure gaussienne, une courbure maximale et une courbure minimale, l'unité de définition de région d'évaluation (333) étant configurée pour définir une ou plusieurs régions cibles d'évaluation (501) par rapport à la surface de l'objet (O), le discriminateur (334) de forme de surface étant configuré pour traiter statistiquement les diverses courbures, les quantités maximales d'inclinaison, et les quantités minimales d'inclinaison des surfaces locales de l'objet (O) calculées par le calculateur (332) de courbure dans la totalité des régions cibles d'évaluation (501), pour calculer ainsi des valeurs médianes des diverses courbures, la quantité maximale d'inclinaison et la quantité minimale d'inclinaison pour chaque région cible d'évaluation (501),

l'unité de détermination de posture de saisie (337) étant configurée pour déterminer une posture de saisie du dispositif de saisie (200) par rapport à l'objet (O),
le programme amenant un ordinateur
à calculer des courbures d'une surface de l'objet (O) sur la base d'informations détectées par le premier détecteur (11) et le second détecteur (12) ;
dans un cas où l'unité de détermination de posture de saisie (337) a déterminé que la surface de l'objet (O) présente une première courbure dans une première direction et présente une seconde courbure plus grande que la première courbure dans une seconde direction différente de la première direction sur la base des courbures calculées de la surface de l'objet (O),
à déterminer une posture de saisie d'un dispositif de saisie (200) de façon à aligner au moins deux ventouses (205) incluses dans la pluralité de ventouses (205) dans la première direction ou à déterminer la posture de saisie du dispositif de saisie (200) de façon à aligner la paire de pinces (801) dans la seconde direction, la première courbure et la seconde courbure étant des valeurs médianes de courbures calculées par le discriminateur (334) de forme de surface,
la première direction étant une direction dans laquelle une courbure est la plus petite sur la surface de l'objet (O) ; et
à classer, dans un cas où le dispositif de commande (300) définit une pluralité de régions cibles d'évaluation (501) sur la surface de l'objet (O), une forme de chacune de la pluralité de régions cibles d'évaluation (501) dans l'un quelconque d'une pluralité de modèles géométriques sur la base des courbures calculées, et à déterminer une région devant être saisie par le dispositif de saisie (200) parmi la pluralité de régions cibles d'évaluation (501) sur la base du modèle géométrique classé de chacune de la pluralité de régions cibles d'évaluation (501) et d'un degré de priorité défini dans chaque modèle géométrique.

FIG. 1

EP 3 617 936 B1

FIG. 2

FIG. 3

FIG. 4

FIG. 5

FIG. 6

(a) CYLINDER    (b) SPHERE    (c) UNDULATING

(d) CURVE + FLAT (CONTINUOUS)    (e) FLAT + FLAT (DISCRETE)    (f) POROUS

EP 3 617 936 B1

FIG. 7

EP 3 617 936 B1

FIG. 8

(a)

MASK IMAGE

| 0<br>(x) | 0<br>(x) | 1<br>(x) | 1<br>(x) | 1<br>(x) | 0<br>(x) |
|---|---|---|---|---|---|
| 0<br>(x) | 1<br>(x) | 1<br>(x) | 1<br>(x) | 1<br>(x) | 1<br>(x) |
| 1<br>(x) | 1<br>(x) | 1<br>(x) | 1<br>(x) | 1<br>(x) | 1<br>(x) |
| 1<br>(x) | 1<br>(x) | 1<br>(x) | 1<br>(x) | 1<br>(x) | 1<br>(x) |
| 1<br>(x) | 1<br>(x) | 1<br>(x) | 1<br>(x) | 1<br>(x) | 0<br>(x) |
| 0<br>(x) | 0<br>(x) | 1<br>(x) | 1<br>(x) | 1<br>(x) | 0<br>(x) |

401

(b)

DEPTH IMAGE

| 0<br>(x) | 0<br>(x) | 0<br>(x) | 36<br>(x) | 46<br>(x) | 0<br>(x) |
|---|---|---|---|---|---|
| 0<br>(x) | 0<br>(x) | 0<br>(x) | 56<br>(x) | 65<br>(x) | 74<br>(x) |
| 0<br>(x) | 0<br>(x) | 0<br>(x) | 96<br>(x) | 0<br>(x) | 120<br>(x) |
| 69<br>(x) | 78<br>(x) | 96<br>(x) | 112<br>(x) | 0<br>(x) | 126<br>(x) |
| 66<br>(x) | 77<br>(x) | 104<br>(x) | 122<br>(x) | 123<br>(x) | 0<br>(x) |
| 0<br>(x) | 0<br>(x) | 0<br>(x) | 121<br>(x) | 110<br>(x) | 0<br>(x) |

402

30

FIG. 9

(a)

(b)

FIG. 10

DATA LOSS

ACTUAL DATA
(DEPTH IMAGE)

FILLING-IN PROCESS

MEDIAN FILTER

GAUSSIAN FILTER

FIG. 11

```
        ( START FILLING-IN PROCESS )
                    │
                    ▼
   ┌─────────────────────────────────┐
   │     FILLING-IN FORWARD PATH     │──S11
   └─────────────────────────────────┘
                    │
                    ▼
   ┌─────────────────────────────────┐
   │    FILLING-IN BACKWARD PATH     │──S12
   └─────────────────────────────────┘
                    │
                    ▼
   ┌─────────────────────────────────┐
   │       SUPERIMPOSITION WITH      │──S13
   │       INPUT MASK IMAGE          │
   └─────────────────────────────────┘
                    │
                    ▼
        ( END FILLING-IN PROCESS )
```

FIG. 12

(a)

FILLING-IN FORWARD PATH

| 0 (x) | 63 (1) | 63 (2) | 36 (3) | 46 (x) | 69 (x) |
|---|---|---|---|---|---|
| 71 (x) | 63 (4) | 63 (5) | 56 (5) | 65 (x) | 74 (x) |
| 71 (x) | 63 (7) | 63 (8) | 96 (9) | 61 (x) | 120 (x) |
| 69 (x) | 78 (x) | 96 (x) | 112 (x) | 89 (x) | 126 (x) |
| 66 (x) | 77 (x) | 104 (x) | 122 (x) | 123 (x) | 115 (x) |
| 82 (x) | 82 (x) | 82 (x) | 121 (x) | 110 (x) | 115 (x) |

402

(b)

FILLING-IN BACKWARD PATH

| 65 (1) | 63 (2) | 63 (3) | 36 (x) | 46 (x) | 69 (x) |
|---|---|---|---|---|---|
| 71 (4) | 63 (5) | 63 (6) | 56 (x) | 65 (x) | 74 (x) |
| 71 (7) | 63 (8) | 63 (9) | 96 (x) | 81 (x) | 120 (x) |
| 69 (x) | 78 (x) | 96 (x) | 112 (x) | 89 (x) | 126 (x) |
| 66 (x) | 77 (x) | 104 (x) | 122 (x) | 123 (x) | 115 (x) |
| 82 (x) | 82 (x) | 82 (x) | 121 (x) | 110 (x) | 115 (x) |

402

(c)

SUPERIMPOSITION WITH INPUT MASK IMAGE

| 0 (x) | 0 (x) | 63 (x) | 36 (x) | 46 (x) | 0 (x) |
|---|---|---|---|---|---|
| 0 (x) | 63 (x) | 63 (x) | 56 (x) | 65 (x) | 74 (x) |
| 71 (x) | 63 (x) | 63 (x) | 96 (x) | 61 (x) | 120 (x) |
| 69 (x) | 78 (x) | 96 (x) | 112 (x) | 89 (x) | 126 (x) |
| 66 (x) | 77 (x) | 104 (x) | 122 (x) | 123 (x) | 0 (x) |
| 0 (x) | 0 (x) | 82 (x) | 121 (x) | 110 (x) | 0 (x) |

402

EP 3 617 936 B1

FIG. 13

（a）

（b）

## FIG. 14

| | GAUSSIAN CURVATURE | | |
|---|---|---|---|
| MEAN CURVATURE | $K_g < 0$ | $K_g = 0$ | $K_g > 0$ |
| $K_m > 0$ | | (c) Cylindrical surface (convex upward) | (e) Spherical surface (convex upward) |
| $K_m = 0$ | (a) Saddle surface | (b) Flat surface | |
| $K_m < 0$ | | (d) Cylindrical surface (convex downward) | (f) Spherical surface (convex downward) |

EP 3 617 936 B1

FIG. 15

HIGH

DEGREE OF PRIORITY

LOW

(b)  Flat surface

(c)  Cylindrical surface
     (convex upward)

(e)  Spherical surface
     (convex upward)

(a)  Saddle surface

(d)  Cylindrical surface
     (convex downward)

(f)  Spherical surface
     (convex downward)

CURVATURE

EP 3 617 936 B1

37

FIG. 16

(a)

HOLDABLE REGION: LARGE

205 601 O

205

601

(b)

HOLDABLE REGION: MEDIUM

205 601 O

205

601

(c)

HOLDABLE REGION: SMALL

205 R 601 O

205

601

FIG. 17

MASK IMAGE

| 0<br>(x) | 0<br>(x) | 0<br>(x) | 0<br>(x) | 0<br>(x) | 0<br>(x) |
|---|---|---|---|---|---|
| 0<br>(x) | 0<br>(x) | 0<br>(x) | 0<br>(x) | 0<br>(x) | 0<br>(x) |
| 1<br>(x) | 1<br>(x) | 1<br>(x) | 1<br>(x) | 1<br>(x) | 1<br>(x) |
| 1<br>(x) | 1<br>(x) | 1<br>(x) | 1<br>(x) | 1<br>(x) | 1<br>(x) |
| 0<br>(x) | 0<br>(x) | 0<br>(x) | 0<br>(x) | 0<br>(x) | 0<br>(x) |
| 0<br>(x) | 0<br>(x) | 0<br>(x) | 0<br>(x) | 0<br>(x) | 0<br>(x) |

701

FIG. 18

```
                    ┌──────────┐
                    │  START   │
                    └────┬─────┘
                         ▼
        ┌──────────────────────────────┐
        │   SMOOTH INPUT IMAGE         │ ～101
        │   (PREPROCESSING)            │
        └──────────────┬───────────────┘
                       ▼
        ┌──────────────────────────────┐
        │   CALCULATE                  │ ～102
        │   CURVATURE/AMOUNT OF TILT   │
        └──────────────┬───────────────┘
                       ▼                      ～103
              ◇ ARE THERE ◇
        TWO OR MORE EVALUATION TARGET ────── YES ──┐
              ◇ REGIONS? ◇                         │
                  │ NO                             │
                  ▼         ～104                   ▼              ～111
    ┌──────────────────────────┐      ┌──────────────────────────────┐
    │ CALCULATE MEDIAN         │      │ CALCULATE MEDIAN VALUE OF     │
    │ VALUE OF                 │      │ CURVATURE/AMOUNT OF TILT FOR  │
    │ CURVATURE/AMOUNT OF TILT │      │ EACH EVALUATION TARGET REGION │
    └────────────┬─────────────┘      └──────────────┬────────────────┘
                 ▼       ～105                         ▼            ～112
    ┌──────────────────────────┐      ┌──────────────────────────────┐
    │ DISCRIMINATE             │      │ DISCRIMINATE                  │
    │ SURFACE OF OBJECT        │      │ SURFACE OF OBJECT             │
    │ (FLAT OR CURVE)          │      │ (FLAT OR CURVE)               │
    └────────────┬─────────────┘      └──────────────┬────────────────┘
                 │                                    ▼            ～113
                 │                    ┌──────────────────────────────┐
                 │                    │ SCORING OF SHAPE              │
                 │                    └──────────────┬────────────────┘
                 ▼◄───────────────────────────────── │
    ┌──────────────────────────┐
    │ GENERATE HOLDABLE        │ ～106
    │ REGION AND DIRECTION     │
    └────────────┬─────────────┘
                 ▼
           ┌──────────┐
           │   END    │
           └──────────┘
```

FIG. 19

FIG. 20

(d) Cylindrical surface
(convex downward)

(f) Spherical surface
(convex downward)

(c) Cylindrical surface
(convex upward)

(a) Saddle surface

(e) Spherical surface
(convex upward)

(b) Flat surface

CURVATURE

DEGREE OF PRIORITY

HIGH

LOW

**EP 3 617 936 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016221187 A1, BRADSKI GARY